# EUROPEAN PATENT APPLICATION

(11) **EP 4 818 964 A1**
(43) Date of publication of application: **07.10.2026**
(21) Application number: 26164879.4
(22) Date of filing: 16.03.2026
(51) Int. Cl.: G06F 40/30, G06F 40/56, G06N 3/0475

(54) **INFORMATION PROCESSING APPARATUS, INFORMATION PROCESSING METHOD, CARRIER MEANS, AND INFORMATION PROCESSING SYSTEM**

(30) Priority: 31.03.2025 JP 2025058019; 16.01.2026 JP 2026005639
(71) Applicant: Ricoh Company, Ltd., Tokyo 143-8555 (JP)
(72) Inventor: AIBA, Akihito, Tokyo, 143-8555 (JP)
(74) Representative: SSM Sandmair

(57) **Abstract**

An information processing apparatus (200) includes an input reception unit (201, 271) to receive input data from a terminal apparatus (300), a first prompt output unit (201, 274) to output a first prompt to a large language model (411). The first prompt requests generation of output data corresponding to the input data. The information processing apparatus (200) includes a first response acquisition unit (201, 273) to obtain, from the large language model (411). The first response data corresponds to the first prompt. The information processing apparatus (200) includes a second prompt output unit (201, 276) to output, to the large language model (411), a second prompt generated based on the first response data, referring to a policy storage unit (204, 230) that stores policy information associating a plurality of roles to be implemented by the large language model (411) with a plurality of policies. In a case where the first response data includes a role of policy update from among the plurality of roles and instruction content for the role of the policy update, the second prompt output unit (204, 230) outputs, to the large language model (411), the second prompt including the role of the policy update, the instruction content for the role of the policy update, and a policy associated with the role of the policy update from among the plurality of policies in the policy information stored in the policy storage unit (204, 230). In a case where the first response data includes another role from among the plurality of roles, for which another policy associated with said another role from among the plurality of policies in the policy information is updated, and instruction content for said another role, the second prompt output unit (204, 230) outputs, to the large language model (411), the second prompt including the instruction content for said another role and said another policy that is updated in the policy information stored in the policy storage unit (204, 230).

## Description

### BACKGROUND

### Technical Field

The present disclosure relates to an information processing apparatus, an information processing method, a carrier means, and an information processing system.

### Related Art

There have been known technologies for assisting a user who conducts a dialogue with a conversation partner. For example, there is a technology to input a first text representing an interviewee's response and an instruction to ask a question regarding the response to a text generation model that generates output text in accordance with input text, and output a question generated by the text generation model as output text to the interviewee.

In the related art, changing a policy for generating output text with respect to input text is not taken into consideration, and even when response data output with respect to input data input by the user differs from content intended by the user, the assistance may continue as it is.

### SUMMARY

The present disclosure described herein provides an information processing apparatus including an input reception unit to receive input data from a terminal apparatus, a first prompt output unit to output a first prompt to a large language model. The first prompt requests generation of output data corresponding to the input data. The information processing apparatus includes a first response acquisition unit to obtain, from the large language model. The first response data corresponds to the first prompt. The information processing apparatus includes a second prompt output unit to output, to the large language model, a second prompt generated based on the first response data, referring to a policy storage unit that stores policy information associating a plurality of roles to be implemented by the large language model with a plurality of policies. In a case where the first response data includes a role of policy update from among the plurality of roles and instruction content for the role of the policy update, the second prompt output unit outputs, to the large language model, the second prompt including the role of the policy update, the instruction content for the role of the policy update, and a policy associated with the role of the policy update from among the plurality of policies in the policy information stored in the policy storage unit. In a case where the first response data includes another role from among the plurality of roles, for which another policy associated with said another role from among the plurality of policies in the policy information is updated, and instruction content for said another role, the second prompt output unit outputs, to the large language model, the second prompt including the instruction content for said another role and said another policy that is updated in the policy information stored in the policy storage unit.

The present disclosure described herein provides an information processing method performed by an information processing apparatus. The method includes receiving input data from a terminal apparatus, outputting a first prompt to a large language model. The first prompt requests generation of output data corresponding to the input data. The method includes obtaining first response data, from the large language model, the first response data corresponding to the first prompt, and outputting a second prompt to the large language model, the second prompt being generated based on the first response data, referring to a policy storage unit that stores policy information associating a plurality of roles to be implemented by the large language model with a plurality of policies. In a case where the first response data includes a role of policy update from among the plurality of roles and instruction content for the role of the policy update, the method includes outputting, to the large language model, the second prompt including the role of the policy update, the instruction content for the role of the policy update, and a policy associated with the role of the policy update from among the plurality of policies in the policy information stored in the policy storage unit. In a case where the first response data includes another role from among the plurality of roles, for which another policy associated with said another role from among the plurality of policies in the policy information is updated, and instruction content for said another role, the method includes outputting, to the large language model, the second prompt including the instruction content for said another role and said another policy that is updated in the policy information stored in the policy storage unit.

The present disclosure described herein provides a carrier means carrying computer-readable codes for controlling a computer to carry out the above-described method.

The present disclosure described herein provides an information processing system including an information processing apparatus and a terminal apparatus to communicate with the information processing apparatus via a network. The information processing apparatus includes an input reception unit to receive input data from the terminal apparatus, a first prompt output unit to output a first prompt to a large language model. The first prompt requests generation of output data corresponding to the input data. The information processing apparatus includes a first response acquisition unit to obtain, from the large language model, first response data corresponding to the first prompt, a second prompt output unit to output a second prompt generated based on the first response data to the large language model, referring to a policy storage unit that stores policy information associating a plurality of roles to be implemented by the large language model with a plurality of policies), and a transmission unit to transmit the output data corresponding to the input data to the terminal apparatus. The terminal apparatus includes a communication control unit to receive the output data, and a display control unit to display the received output data. In a case where the first response data includes a role of policy update from among the plurality of roles and instruction content for the role of the policy update, the second prompt output unit outputs, to the large language model, the second prompt including the role of the policy update, the instruction content for the role of the policy update, and a policy associated with the role of the policy update from among the plurality of policies in the policy information stored in the policy storage unit. In a case where the first response data includes another role from among the plurality of roles, for which another policy associated with said another role from among the plurality of policies in the policy information is updated, and instruction content for said another role, the second prompt output unit outputs, to the large language model, the second prompt including the instruction content for said another role and said another policy that is updated in the policy information stored in the policy storage unit.

According to one aspect of the disclosure, the accuracy of response data output with respect to input data can be enhanced.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a system configuration of an information processing system according to a first embodiment;
FIG. 2 is a diagram illustrating an outline of an operation performed by the information processing system according to the first embodiment;
FIG. 3 is a block diagram illustrating a hardware configuration of an information processing apparatus according to the first embodiment;
FIG. 4 is a block diagram illustrating a hardware configuration of a terminal apparatus according to the first embodiment;
FIG. 5 is a block diagram illustrating a functional configuration of each apparatus included in the information processing system according to the first embodiment;
FIG. 6 is a diagram illustrating an example of policy storage unit according to the first embodiment;
FIG. 7 is a sequence diagram illustrating an operation performed by the information processing system according to the first embodiment;
FIG. 8 is a diagram illustrating an example of an operation of an information processing system;
FIG. 9 is a diagram illustrating another example of an operation of an information processing system;
FIG. 10 is a diagram illustrating still another example of an operation of an information processing system;
FIG. 11 is a diagram illustrating still another example of an operation of an information processing system;
FIG. 12 is a diagram illustrating still another example of an operation of an information processing system;
FIG. 13 is a diagram illustrating still another example of an operation an information processing system;
FIG. 14 is a diagram illustrating a screen displayed on the terminal apparatus according to the first embodiment;
FIG. 15 is a diagram illustrating another screen displayed on the terminal apparatus according to the first embodiment; and
FIG. 16 is a block diagram illustrating a functional configuration of each apparatus included in an information processing system according to a second embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment

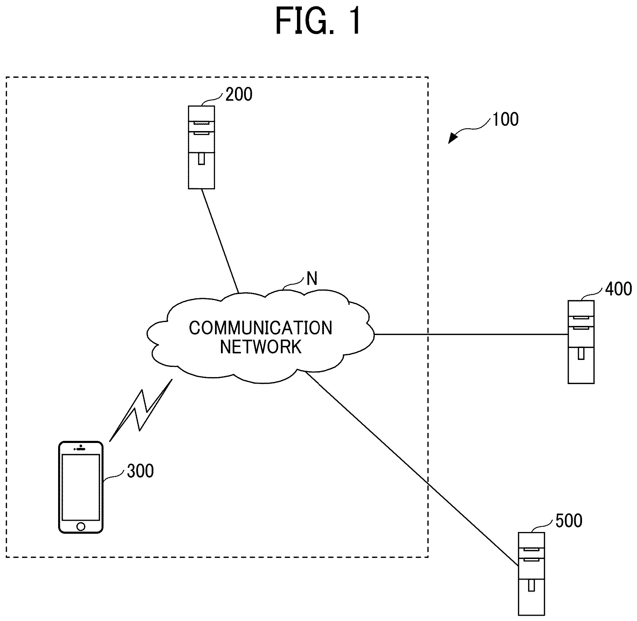

Embodiments of the present disclosure are described below with reference to the drawings. FIG. 1 is a diagram illustrating a system configuration of an information processing system according to a first embodiment.

An information processing system 100 includes an information processing apparatus 200 and a terminal apparatus 300. In the information processing system 100, the information processing apparatus 200 and the terminal apparatus 300 are connected to each other via a network N. Further, the information processing apparatus 200 communicates with a server 400 and a controlled object 500 via the network N.

The network N may be a wide area network such as the Internet or a wide area network (WAN). The network N may be a local area network (LAN), Wi-Fi^{®}, a wide area Ethernet^{®}, or a mobile phone network of 4G, 5G, or 6G.

The server 400 includes a large language model (LLM) and implements a generative artificial intelligence (AI). The generative AI generates text data based on an input prompt, and outputs the generated text to the information processing apparatus 200. Chat Generative Pre-trained Transformer (GPT) is one example of the generative AI. The term "prompt" refers to text data that describes an instruction or a question to the server 400 that implements the generative AI. A large language model will be described in detail later.

The controlled object 500 includes various systems that can communicate with the information processing apparatus 200. Specifically, the controlled object 500 is a system such as a business system that includes a database accessible within the organization to which the user of the terminal apparatus 300 belongs. In this case, the controlled object 500 can obtain data or rewrite data using an application programming interface (API).

Further, the controlled object 500 may be, for example, a system that provides an external service such as a web search. In this case, the search results can be obtained from the controlled object 500 using, for example, an API.

Further, the controlled object 500 includes systems in which applications are installed on the terminal apparatus 300, such as a mail system, image editing software, a web conferencing system, etc. that can be used by the user of the terminal apparatus 300. In this case, the controlled object 500 can obtain search result data (mail data, web-conference data) or edited data via, for example, a command.

Further, the controlled object 500 includes actual devices, such as printers and robots. In that case, the controlled object 500 can obtain an execution-completion signal, a sensor output, or a recognition result derived from the sensor output, for example in response to an execution command. In FIG. 1, the controlled object 500 is illustrated as being external to the information processing apparatus 200, but is not limited thereto. The controlled object 500 may be a database (storage unit) implemented by a memory (storage device) included in the information processing apparatus 200.

The information processing system 100 includes at least the information processing apparatus 200 and the terminal apparatus 300, and may or may not include the server 400.

The terminal apparatus 300 is typically used by a user of the information processing system 100. The information processing system 100 assists the user of the terminal apparatus 300, for example, in cases where the user poses inquiries or questions to an interlocutor and obtains answers from the interlocutor. Specifically, the cases include cases where the user of the terminal apparatus 300 conducts an interview with an interlocutor on a predetermined topic, cases where the user acts as an interviewer and conducts an interview with an interviewee, and cases where the user analyzes the issues or concerns of the interlocutor through dialogue. In the following description, the user of the terminal apparatus 300 may be referred to simply as the user.

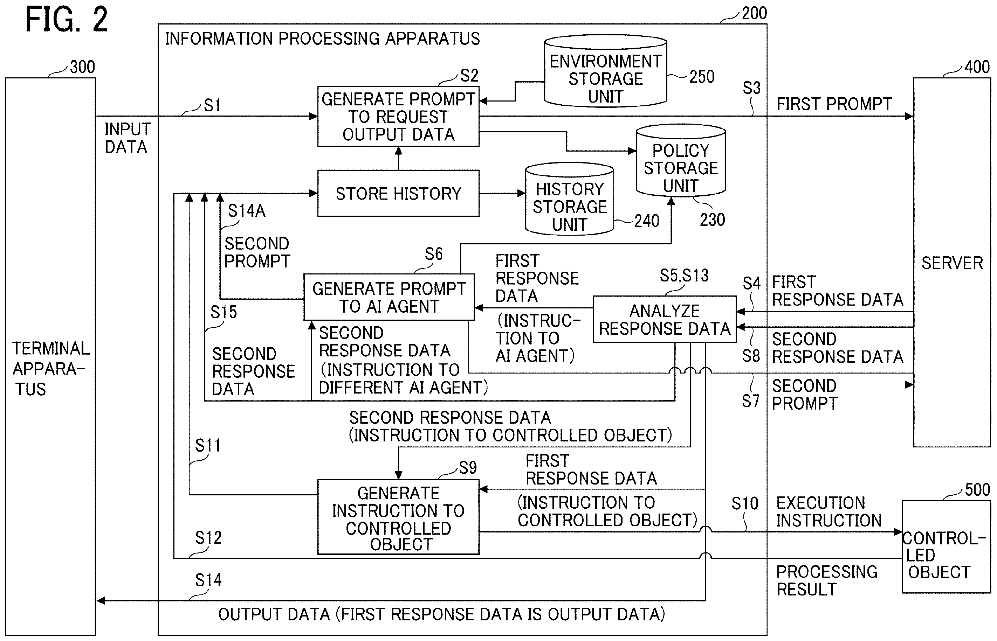

An overview of an operation of the information processing system 100 is described below with reference to FIG. 2. FIG. 2 is a diagram illustrating an overview of an operation of the information processing system 100 according to the first embodiment.

In the following description, an example is given in which the user conducts an interview with an interlocutor on a specific topic.

In step S1, the information processing apparatus 200 in the information processing system 100 receives input data from the terminal apparatus 300.

The input data is data input from the user to the information processing apparatus 200 via the terminal apparatus 300. The input data includes an instruction from the user. Specifically, the input data includes data regarding an interlocutor who engages in dialogue with the user, data indicating a goal that the user intends to achieve, data indicating an answer to a question posed by the user to the interlocutor, and data indicating a reaction to an inquiry made by the user. The input data can be entered as text data or as audio data. Further, the input data may be image data or video data.

In step S2, in response to receiving the input data, the information processing apparatus 200 generates a prompt to request output data corresponding to the input data. In step S3, the information processing apparatus 200 outputs the prompt to the server 400. The term "prompt" refers to text data that describes an instruction or a question to be provided to a large language model. While text data representing an instruction or a question for the large language model is one example of a prompt, the prompt is not limited thereto.

In the following description, a prompt to request output data corresponding to input data is referred to as a first prompt. The first prompt is described below.

The first prompt is a prompt that requests generation of output data corresponding to input data and causes a large language model to implement a role of orchestrating processing for obtaining the output data corresponding to input data. The large language model functions as an orchestrator AI agent that orchestrator processing for obtaining output data when a prompt is input. The role refers to a function that a large language model 411 is to perform.

The AI agent outputs corresponding response data in response to an input prompt. The AI agent recognizes an environment for achieving a specific goal, and outputs, as response data, a result of autonomous decision-making performed in response to the input prompt. The prompts input to the AI agent may include not only text data but also image data, audio data, and video data. Additionally, the prompts input to the AI agent may include diagrams, illustrations, graphs, charts, and three-dimensional objects.

For example, the orchestrator AI agent infers a procedure for obtaining output data based on input data and causes the large language model to implement various roles to achieve the inferred procedure.

The method is described below.

The information processing apparatus 200 includes a policy storage unit 230, a history storage unit 240, and an environment storage unit 250. The policy storage unit 230 stores policy information indicating a policy for each role to be implemented in the large language model. The term "policy" refers to an intended direction, practical guidance, guidelines, or any combination of these, for performing a function. The term "policy information" refers to information that indicates an intended direction, practical guidance, guidelines, or any combination of these, for performing a function.

The history storage unit 240 stores history information indicating processing history of the information processing system 100. History information indicating a processing history of the information processing system 100 includes history information indicating interactions between the information processing apparatus 200 and the server 400, and history information indicating the result of control of the controlled object 500 by the information processing apparatus 200.

The environment storage unit 250 stores environment information indicating the controlled object 500 that can communicate with the information processing apparatus 200. In other words, the environment information is information indicating the controlled object 500 that can receive an execution instruction for executing various processing from the information processing apparatus 200 and provide the processing result to the information processing apparatus 200. The policy storage unit 230, the history storage unit 240, and the environment storage unit 250 are described in detail below.

In response to receiving input data from the terminal apparatus 300, the information processing apparatus 200 generates a first prompt that includes policy information stored in the policy storage unit 230, history information stored in the history storage unit 240, and environment information stored in the environment storage unit 250. In other words, the first prompt includes input data entered via the terminal apparatus 300, policy information indicating a policy for each role, history information indicating a past operation of the information processing system 100, and environment information indicating an environment in which the information processing apparatus 200 can perform control.

The first prompt that includes policy information indicating a policy for each role allows the large language model functioning as an orchestrator AI agent to infer the execution order of roles indicated by the first prompt as a procedure for obtaining output data corresponding to input data.

In step S4, the information processing apparatus 200 obtains (receives) response data corresponding to the first prompt from the server 400. In the following description, the response data output by the large language model of the server 400 in response to the first prompt may be referred to as first response data.

The first response data includes information for executing a procedure inferred by the large language model functioning as an orchestrator AI agent. Specifically, the first response data includes information for causing the large language model to function as an AI agent that performs a designated role, and information for instructing the execution of processing on the designated controlled object 500. The first response data becomes output data corresponding to the input data when the execution of the procedure inferred by the orchestrator AI agent is completed.

In step S5, the information processing apparatus 200 analyzes the first response data. In step S6, when the analysis in step S5 reveals that the first response data includes information for causing the large language model to function as an AI agent that performs a designated role, the information processing apparatus 200 generates a prompt to cause the large language model to function as the AI agent that performs the role designated in the first response data.

The information for causing a large language model to function as an AI agent that performs a designated role includes the role to be implemented by the large language model and instruction content for the role. In other words, the information for causing a large language model to function as an AI agent that performs a designated role includes the role of the AI agent implemented by the large language model and instruction content provided to the AI agent.

In the following description, a prompt to cause a large language model to function as an AI agent that performs a designated role may be referred to as a second prompt. The information processing apparatus 200 refers to the policy storage unit 230, retrieves policy information associated with a role designated in the first response data, and generates, as a second prompt, a prompt that includes the retrieved policy information and the instruction content for the role designated in the first response data.

In step S7, the information processing apparatus 200 outputs the second prompt to the server 400. In step S8, the information processing apparatus 200 obtains response data corresponding to the second prompt from the server 400. In the following description, the response data corresponding to the second prompt may be referred to as second response data.

In step S9, when the analysis in step S5 reveals that the first response data includes information for instructing the execution of processing on the controlled object 500, the information processing apparatus 200 generates an execution instruction for processing on the designated controlled object 500. The information for instructing the execution of processing on the designated controlled object 500 includes information designating the controlled object 500 and processing content to be performed on the designated controlled object 500.

In step S10, the information processing apparatus 200 outputs, to the designated controlled object 500, the generated execution instruction for processing. In step S11, the information processing apparatus 200 stores the generated execution instruction in the history storage unit 240. In step S12, the information processing apparatus 200 stores a result of processing performed based on the execution, namely the processing result obtained from the controlled object 500, in the history storage unit 240, and returns to step S2.

In step S13, when the information processing apparatus 200 obtains the second response data, the information processing apparatus 200 analyzes the second response data. In steps S14A and S15, the information processing apparatus 200 stores the second prompt and the second response data in association with each other in the history storage unit 240.

When the analysis in step S13 reveals that the second response data includes information for causing the large language model to function as an AI agent that performs another role, the information processing apparatus 200 returns to step S6 and generates a new second prompt, and performs the processing up to step S13.

Further, when the analysis in step S13 reveals that the second response data includes information for instructing the execution of processing on the designated controlled object 500, the information processing apparatus 200 performs step S9 to step S12, and based on the history information stored in the history storage unit 240 in steps S11 and S12, proceeds to step S6 again.

The information processing apparatus 200 repeats the above-described processing until the second response data becomes an answer to the first response data, namely, until the second response data is determined to constitute the response to the instruction specified in the first response data, and when the second response data becomes an answer to the first response data, namely, when the second response data is determined to constitute the response to the instruction specified in the first response data, the information processing apparatus 200 returns to step S2.

In step S14, when the first response data is output data corresponding to the input data, the information processing apparatus 200 transmits the first response data to the terminal apparatus 300.

In response to receiving input data in step S1, the information processing apparatus 200 repeats from step S2 to step S14 until the first response data becomes output data corresponding to the input data in step S5. Thus, according to the first embodiment, output data corresponding to input data entered by a user can be presented to the user. The method of presenting the output data to the user may be either by displaying the output data on a display or by playing back the output as audio data.

In the first embodiment, a role for improving a policy for a role is included in the roles to be implemented by the large language model, and the policy storage unit 230 automatically updates policy information accordingly during the series of steps described above. In the present disclosure, the term "improve" refers to making something more desirable.

Specifically, for example, when first response data corresponding to a first prompt includes a role for improving a policy and instruction content that directs the improvement of the policy, the information processing apparatus 200 generates a second prompt to cause a large language model to function as a policy-improvement AI agent and outputs the second prompt to the server 400.

Then, the information processing apparatus 200 generates an additional first prompt that includes second response data obtained from the policy-improvement AI agent and outputs the additional first prompt to the server 400, and obtains the additional first response data that instructs to rewrite the policy storage unit 230 from the server 400. In other words, the information processing apparatus 200 designates the policy storage unit 230 as the controlled object 500 and obtains the additional first response data with the instruction content of updating the policy information.

The information processing apparatus 200 updates the policy information stored in the policy storage unit 230 according to the additional first response data and stores the processing result in the history storage unit 240.

Through this process, the policy information stored in the policy storage unit 230 can be updated based on the second response data from the AI agent having the role for improving a policy.

Accordingly, according to the first embodiment, even when the user is conducting an interview with the assistance of the information processing apparatus 200 but the progress is not satisfactory, the policy of the AI agent implemented by the large language model can be automatically improved. As a result, output data suitable for the situation can be presented to the user in response to input data entered by the user, and the accuracy of the output data corresponding to the input data can be increased.

In FIGS. 1 and 2, the information processing apparatus 200 and the terminal apparatus 300 are illustrated as separate apparatuses (devices), but the configuration is not limited thereto. The information processing apparatus 200 may also have the functionality of the terminal apparatus 300. In FIGS. 1 and 2, the information processing apparatus 200 and the server 400 are illustrated as separate apparatuses (devices), but the configuration is not limited thereto. The server 400 may be included in the information processing apparatus 200.

In FIGS. 1 and 2, the information processing apparatus 200 may be implemented by one or more information processing apparatuses, such that a plurality of information processing apparatuses 200 may be illustrated.

An example hardware configuration of each apparatus or device included in the information processing system 100 is described below.

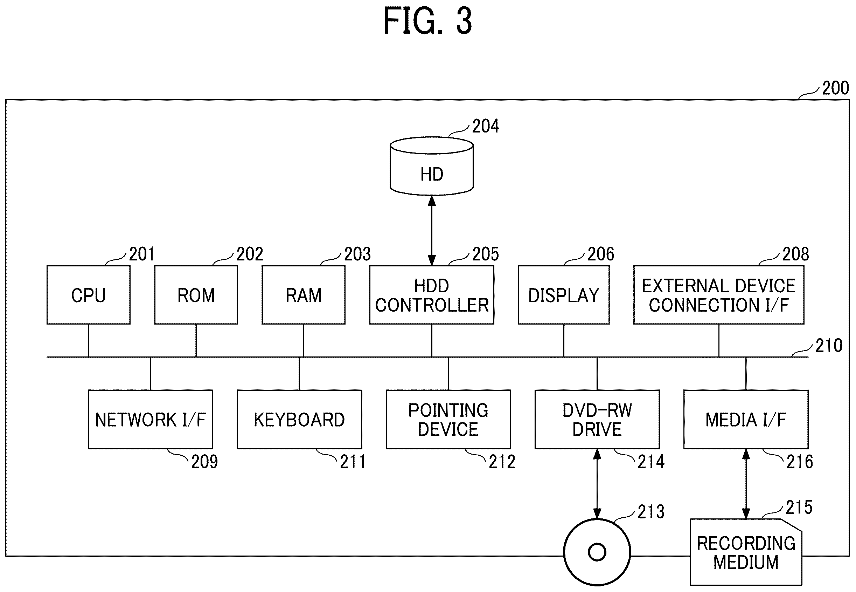

FIG. 3 is a block diagram illustrating a hardware configuration of the information processing apparatus 10 according to the first embodiment. The information processing apparatus 200 illustrated in FIG. 2, which is implemented by a computer, includes a central processing unit (CPU) 201, a read-only memory (ROM) 202, a random-access memory (RAM) 203, a hard disk (HD) 204, a hard disk drive (HDD) controller 205, a display 206, an external device connection interface (I/F) 208, a network I/F 209, a bus line 210, a keyboard 211, a pointing device 212, a Digital Versatile Disk Rewritable (DVD-RW) drive 214, and a media I/F 216.

The CPU 201 controls the overall operation of the information processing apparatus 200. The ROM 202 stores a program such as an initial program loader (IPL) used for booting the CPU 201. The RAM 203 is used as a work area for the CPU 201. The HD 204 stores various data such as a program. The HDD controller 205 controls the reading and writing of various data to and from the HD 204 under the control of the CPU 201. The display 206 displays various types of information, such as a cursor, a menu, a window, text, or an image. The external device connection I/F 208, which may be implemented by an interface circuit, is an interface for connection with various external devices. Examples of the external devices include, but not limited to, a universal serial bus (USB) memory and a printer.

The network I/F 209, which may be implemented by an interface circuit, is an interface for data communication through a communication network. The bus line 210 is an address bus or a data bus that electrically connects the components illustrated in FIG. 3, such as the CPU 201, to each other.

The keyboard 211 is an example of an input device provided with a plurality of keys for allowing a user to input characters, numerals, or various instructions. The pointing device 212 is an example of an input device that allows selection or execution of various instructions, selection of a processing target, and movement of a cursor. The DVD-RW drive 214 controls the reading and the writing of various data to and from a DVD-RW 213, which is an example of a removable recording medium. The removable recording medium is not limited to a DVD-RW and may be, for example, a digital versatile disc recordable (DVD-R). The media I/F 216 controls the reading and writing (storing) of data to (in) and from a recording medium 215 such as a flash memory.

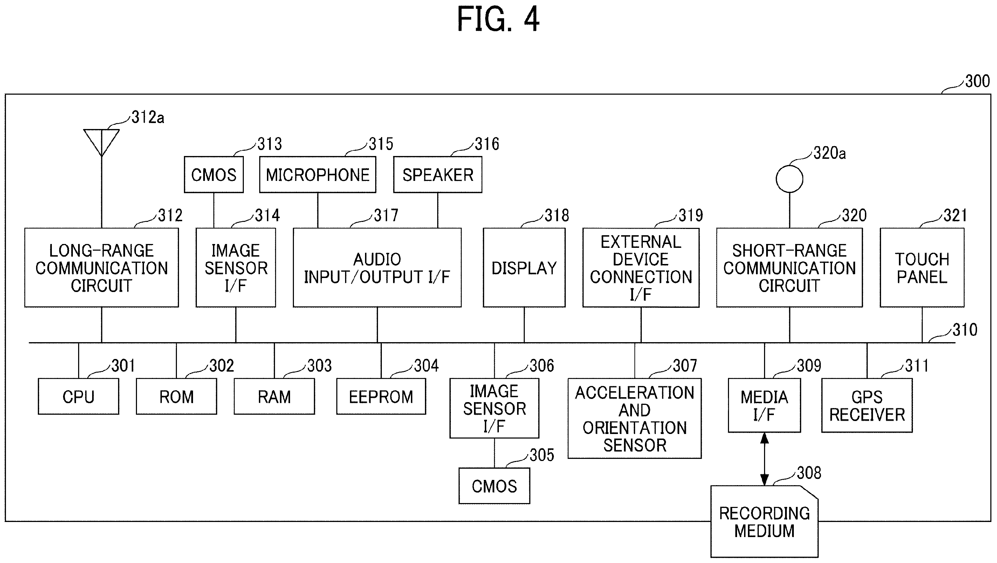

FIG. 4 is a block diagram illustrating a hardware configuration of the terminal apparatus 300 according to the first embodiment. The terminal apparatus 300 includes a CPU 301, ROM 302, RAM 303, electrically erasable and programmable ROM (EEPROM) 304, a complementary metal oxide semiconductor (CMOS) sensor 305, an image sensor I/F 306, an acceleration and orientation sensor 307, a media I/F 309, and a global positioning system (GPS) receiver 311.

The CPU 301 is an arithmetic processing unit, which controls the entire operation of the terminal apparatus 300. The ROM 302 stores a program such as an IPL used for driving the CPU 301. The RAM 303 is used as a work area for the CPU 301. The EEPROM 304 reads or writes various data such as a control program for a smartphone under the control of the CPU 301. The ROM 302, RAM 303, and EEPROM 304 are examples of storage devices for the terminal apparatus 300.

The CMOS sensor 305 is an example of a built-in imaging device (imaging means) that captures an object (mainly, a self-image of a user) under the control of the CPU 301 to obtain image data. In alternative to the CMOS sensor, an imaging device such as a charge-coupled device (CCD) sensor may be used.

The image sensor I/F 306 is a circuit that drives the CMOS sensor 305. Examples of the acceleration and orientation sensor 307 include, but not limited to, an electromagnetic compass or gyrocompass for detecting geomagnetism and an acceleration sensor. The media I/F 309 controls the reading and writing (storing) of data to and from a storage media 308 such as a flash memory. The GPS receiver 311 receives a GPS signal from a GPS satellite.

The terminal apparatus 300 further includes a long-range communication circuit 312, an antenna 312a for the long-range communication circuit 312, a CMOS sensor 313, an image sensor I/F 314, a microphone 315, a speaker 316, an audio input/output (I/O) I/F 317, a display 318, an external device connection I/F 319, a short-range communication circuit 320, an antenna 320a for the short-range communication circuit 320, and a touch panel 321.

The long-range communication circuit 312 is a circuit that communicates with other devices through a communication network. The CMOS sensor 313 is an example of a built-in imaging device (imaging means) that captures an object to obtain the image data under the control of the CPU 401. The image sensor I/F 314 is a circuit that drives the CMOS sensor 313. The microphone 315 is a built-in circuit that converts sound into an electrical signal. The speaker 316 is a built-in circuit that converts electrical signals into physical vibrations to generate audio such as music or voice. The audio input/output I/F 317 is a circuit that controls the input and output of audio signals between the microphone 315 and the speaker 316 under the control of the CPU 301.

The display 318 is an example of a display device that displays an image of the object, various icons, etc. Examples of the display 318 include a Liquid Crystal Display (LCD) and an organic Electro Luminescence (EL) display. The external device connection I/F 319 is an interface for connecting to various external devices. The short-range communication circuit 320 is a communication circuit that communicates according to standards such as near field communication (NFC) and Bluetooth^{®}.

The touch panel 321 is an example of an input device that allows a user to input an instruction to the terminal apparatus 300 by touching the screen of the display 318. The display 318 is an example of a display unit included in the terminal apparatus 300.

The hardware configuration illustrated in FIG. 4 is merely an example of the hardware configuration of the terminal apparatus 300, and the terminal apparatus 300 may have a hardware configuration other than that illustrated in FIG. 4. For example, the hardware configuration of the terminal apparatus 300 may be the configuration illustrated in FIG. 3.

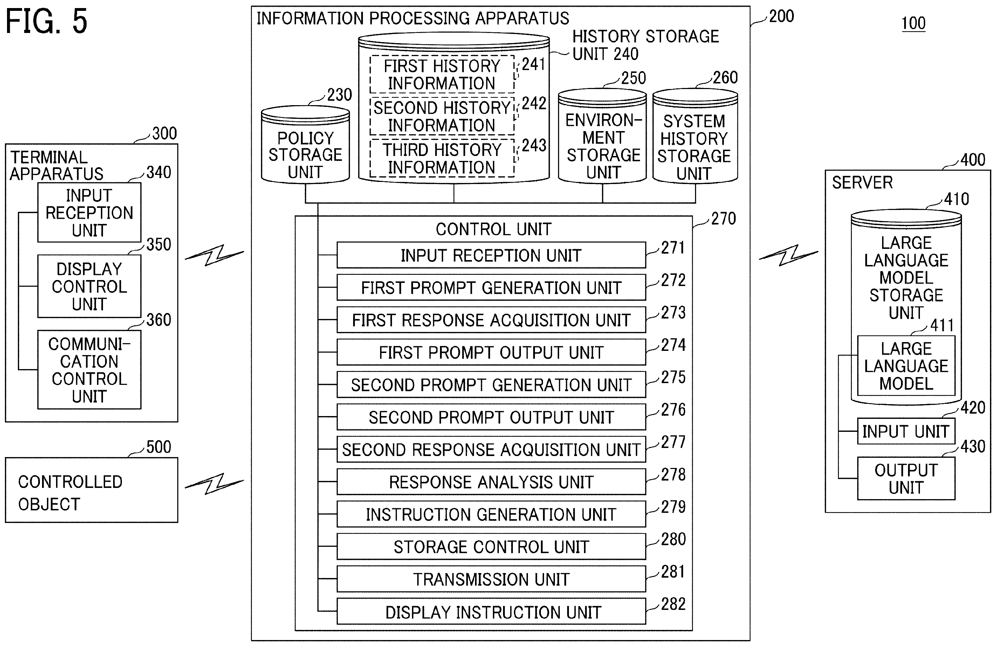

A functional configuration of each apparatus (device) included in the information processing system 100 is described below with reference to FIG. 5. FIG. 5 is a block diagram illustrating functions of each apparatus included in the information processing system according to the first embodiment.

A functional configuration of the information processing apparatus 200 is described below. The information processing apparatus 200 includes a policy storage unit 230, a history storage unit 240, an environment storage unit 250, a system history storage unit 260, and a control unit 270. The policy storage unit 230, the history storage unit 240, the environment storage unit 250, and the system history storage unit 260 are implemented, for example, by the HD 204 of the information processing apparatus 200. The control unit 270 is implemented by the CPU 201 of the information processing apparatus 200 reading and executing instructions included in one or more programs installed in, for example, the HD 204.

The policy storage unit 230 stores policy information. The history storage unit 240 stores history information. The history information stored in the history storage unit 240 includes first history information 241, second history information 242, and third history information 243.

The first history information 241 is history information that associates a first prompt with first response data. The second history information 242 is history information that associates a second prompt with second response data. The third history information 243 is history information that associates the designated controlled object 500, an execution instruction for processing on the designated controlled object 500, and the processing result obtained from the controlled object 500.

The history storage unit 240 temporarily holds the first history information 241, the second history information 242, and the third history information 243 from the time the information processing apparatus 200 receives input data until the information processing apparatus 200 transmits output data to the terminal apparatus 300. The first history information 241, the second history information 242, and the third history information 243 stored in the history storage unit 240 are deleted from the history storage unit 240 when the output data is transmitted to the terminal apparatus 300. The first history information 241, the second history information 242, and the third history information 243 are persistently stored in the system history storage unit 260 before being deleted from the history storage unit 240.

The environment storage unit 250 stores environment information. The environment information includes list information indicating a list of controlled objects 500. In the following description, the list information indicating a list of controlled objects 500 may be referred to as list information for controlled objects 500. The list information for controlled object 500 includes identification information for identifying a controlled object 500, text describing the properties and uses of the controlled object 500. The list information for controlled object 500 and the list information for various devices may be switched or have access restricted according to the user's authorization level.

The system history storage unit 260 stores the processing history of the information processing system 100. The processing history of the information processing system 100 is the history of various processes performed in the information processing system 100. Further, the system history storage unit 260 stores the first history information 241, the second history information 242, and the third history information 243. Various types of history information stored in the system history storage unit 260 are persistently stored.

The control unit 270 includes an input reception unit 271, a first prompt generation unit 272, a first prompt output unit 273, a first response acquisition unit 274, a second prompt generation unit 275, a second prompt output unit 276, a second response acquisition unit 277, a response analysis unit 278, an instruction generation unit 279, a storage control unit 280, a transmission unit 281, and a display instruction unit 282.

The input reception unit 271 receives various inputs to the information processing apparatus 200. Specifically, the input reception unit 271 receives input data from the terminal apparatus 300.

The first prompt generation unit 272 generates a first prompt based on the input data. The first prompt output unit 273 outputs the first prompt generated by the first prompt generation unit 272 to the server 400. The first response acquisition unit 274 acquires first response data in response to the first prompt from the server 400.

The second prompt generation unit 275 generates a second prompt based on the first response data. The second prompt output unit 276 outputs a second prompt to the server 400. The second response acquisition unit 277 acquires second response data in response to the second prompt from the server 400.

The response analysis unit 278 analyzes the first response data and the second response data acquired by the first response acquisition unit 274 and the second response acquisition unit 277, respectively. Specifically, when the first response data includes a role and instruction content for the role, the response analysis unit 278 requests the second prompt generation unit 275 to generate a second prompt. In other words, when the first response data includes a designated role and the instruction content for the role of the AI agent, the response analysis unit 278 requests the second prompt generation unit 275 to generate a second prompt.

For example, when the first response data includes text data indicating improvement of a policy, the response analysis unit 278 determines that the AI agent with the role designated in the first response data is a policy-improvement AI agent. For example, the response analysis unit 278 determines whether the first response data includes predetermined keywords such as "POLICY IMPROVEMENT" or "ROLE: POLICY IMPROVEMENT." Then, when the first response data includes a predetermined keyword, the response analysis unit 278 determines that the AI agent designated in the first response data is a policy-improvement AI agent and requests the second prompt generation unit 275 to generate a second prompt instructing policy improvement.

Further, when the first response data includes environment information designating a controlled object 500 and an execution instruction for processing, the response analysis unit 278 requests the instruction generation unit 279 to generate an execution instruction for processing on the designated controlled object 500.

Further, when the first response data is output data corresponding to the input data, the response analysis unit 278 requests the transmission unit 281 to transmit the first response data as output data.

The instruction generation unit 279 generates an execution instruction for processing on the controlled object 500 included in the environment information. The generated execution instruction is described in, for example, in an API description or commands.

The storage control unit 280 controls the storage of various types of information. Specifically, the storage control unit 280 stores the first history information 241 that associates a first prompt with first response data, and the second history information 242 that associates a second prompt with second response data in the history storage unit 240. Further, the storage control unit 280 stores the third history information 243 that associates an execution instruction for processing on the designated controlled object 500 and a processing result obtained from the designated controlled object 500 in the history storage unit 240. Further, when output data is transmitted to the terminal apparatus 300, the storage control unit 280 stores the first history information 241, the second history information 242, and the third history information 243 in the system history storage unit 260 and deletes the first history information 241, the second history information 242, and the third history information 243 from the history storage unit 240.

The transmission unit 281 transmits information from the information processing apparatus 200 to the terminal apparatus 300 and to the controlled object 500. Specifically, in response to receiving a request to transmit the first response data to the terminal apparatus 300 by the response analysis unit 278, the transmission unit 281 transmits the first response data to the terminal apparatus 300 as output data corresponding to the input data. Further, the transmission unit 281 transmits an execution instruction to the controlled object 500 for executing processing on the controlled object 500.

The display instruction unit 282 instructs the terminal apparatus 300 to perform various types of display processing. Specifically, the display instruction unit 282 causes the terminal apparatus 300 to display the first response data and the second response data. Further, the display instruction unit 282 causes the terminal apparatus 300 to display a role and a policy from policy information stored in the policy storage unit 230.

In FIG. 5, the information processing apparatus 200 includes the policy storage unit 230, the history storage unit 240, the environment storage unit 250, and the system history storage unit 260, but the configuration is not limited thereto.

Each of these storage units may be provided in whole or in part, in an external device that communicates with the information processing apparatus 200. In FIG. 5, the information processing apparatus 200 includes the control unit 270, but the configuration is not limited thereto. The functional units of the control unit 270 may be implemented by multiple information processing apparatuses. In other words, the functional units of the information processing apparatus 200 may be implemented by multiple information processing apparatuses.

A functional configuration of the terminal apparatus 300 is described below. The terminal apparatus 300 includes an input reception unit 340, a display control unit 350, and a communication control unit 360. The input reception unit 340 receives an input to the terminal apparatus 300. The display control unit 350 controls a display of the terminal apparatus 300. For example, the display control unit 350 displays data received from the information processing apparatus 200 on the display. The communication control unit 360 controls communication between the terminal apparatus 300 and the information processing apparatus 200. For example, the communication control unit 360 transmits input data received from the user to the information processing apparatus 200. Further, for example, the communication control unit 360 receives output data generated by the large language model from the information processing apparatus 200.

The input reception unit 340, the display control unit 350, and the communication control unit 360 may be implemented by a web browser included in the terminal apparatus 300, or may be implemented by means other than the web browser. Although an example is described in which data received from the information processing apparatus 200 is displayed on a display, the embodiment is not limited thereto. The data received from the information processing apparatus 200 may be output or played back as audio.

The server 400 includes a large language model storage unit 410, an input unit 420, and an output unit 430. The large language model storage unit 410 stores the large language model 411 for implementing a generative AI.

The large language model 411 is a computer language model that is generated by executing a training process using a huge amount of unlabeled text as training data and includes an artificial neural network having a large number of parameters. The large language model 411 is sufficiently trained by a method for learning a context, such as next-sentence prediction to understand a context by determining whether sentence 1 and sentence 2 are consecutive or a masked language model to understand a context by masking a word in a sentence and predicting the masked word from words that come before and after the masked word, to capture many sentence structures and meanings of human language.

In the present embodiment, the large language model 411 implements an AI agent that performs various roles according to the second prompt, but the present embodiment is not limited thereto. The server 400 may have AI agents that implements various roles separately from the large language model 411.

The input unit 420 inputs the prompts (first prompt and second prompt) transmitted from the information processing apparatus 200 to the large language model 411. The output unit 430 outputs (transmits) output data output from the large language model 411 to the information processing apparatus 200. In other words, the output unit 430 transmits the response data (first response data and second response data) corresponding to the prompt, output from the large language model 411 to the information processing apparatus 200.

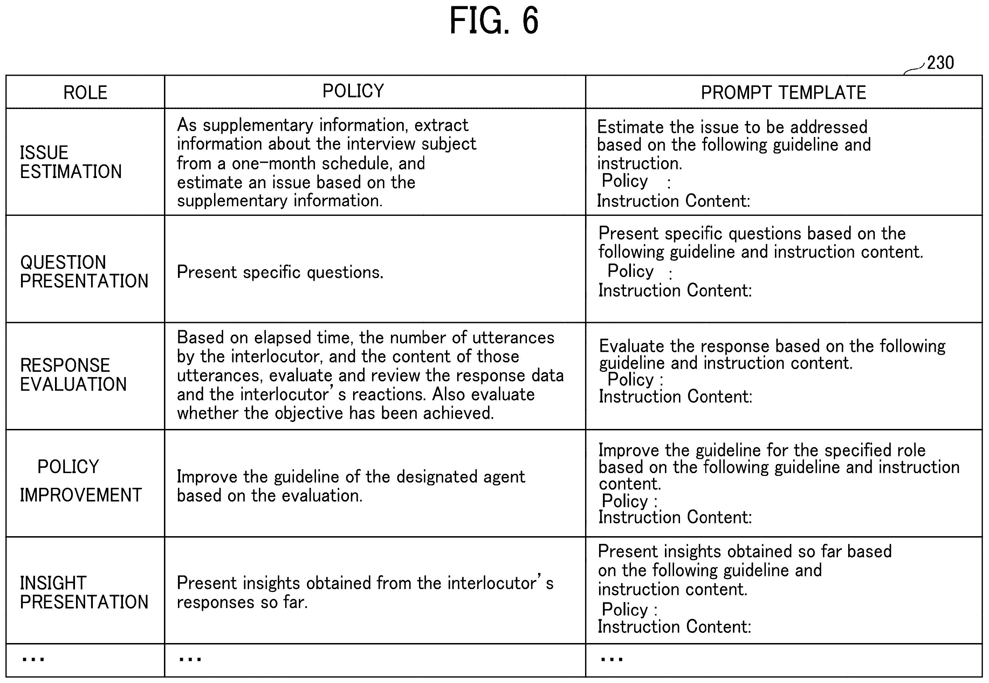

The policy storage unit 230 included in the information processing apparatus 200 is described below with reference to FIG. 6. FIG. 6 illustrates an example of a policy storage unit according to the first embodiment.

The policy information stored in the policy storage unit 230 includes information items such as a role, a policy, and a prompt template that are associated with each other.

The value of the item "ROLE" indicates the role of the AI agent implemented by the large language model 411. The value of the item "POLICY" indicates the policy for implementing the role. The value of the item "PROMPT TEMPLATE" indicates text data representing a template for a prompt to cause the large language model 411 to function as an AI agent in the corresponding role.

The policy (also referred to as a "strategy") included in the policy information are described. In this disclosure, a "policy" indicates what an AI agent implemented by the large language model 411 performs to carry out the role associated with the policy. In other words, the policy indicates the processes, rules, and other provisions governing the process by which the AI agent implemented by the large language model 411 outputs the second response data.

The policy may be described in natural language or in a structured format, such as bullet points, JavaScript Object Notation (JSON), or Extensible Markup Language (XML). The policy may also be described in a programming language such as Python.

In FIG. 6, when the large language model 411 is caused to function as an issue-estimation AI agent performing the role of "ISSUE ESTIMATION," the second prompt includes text data indicating "Please estimate an issue to be addressed based on the following policy and instruction.", a policy stating, "As supplementary information, extract information about the interview subject from a one-month schedule, and estimate an issue based on the supplementary information.", and the instruction content included in the first response data.

As described above, a second prompt including a role, a policy for performing the role, and instruction content included in the first response data is generated and output to the server 400, and such a second prompt can cause the large language model 411 to function as an AI agent performing the role.

In the policy information stored in the policy storage unit 230, a value of the item "POLICY" is allowed to be updated, but the text data that is a value of the item "PROMPT TEMPLATE" is prohibited from being updated.

In FIG. 6, issue estimation, question presentation, response evaluation, policy improvement, and insight presentation are given as examples of roles, but the roles are not limited to these, and any role may be added.

When policy information associated with the role of "ISSUE ESTIMATION" is included in the second prompt, the large language model 411 functions as an issue-estimation AI agent that performs issue estimation. The issue-estimation AI agent estimates a matter to be identified from an interlocutor and an issue to be presented, in response to the second prompt, and outputs the estimated issue. The issue-estimation AI agent, for example, estimates an issue to be presented by searching a database included in the controlled object 500 for information about an organization to which the interlocutor belongs, or by obtaining a history of questions previously posed to an interlocutor having similar attributes.

When policy information associated with the role of "QUESTION PRESENTATION" is included in the second prompt, the large language model 411 functions as a question-presentation AI agent that performs question presentation. The question-presentation AI agent outputs a specific question and a specific issue statement to be presented to an interlocutor, in response to the second prompt. The question-presentation AI agent, for example, adjusts wording in accordance with the interlocutor, or attaches figures to facilitate understanding.

When policy information associated with the role of "RESPONSE EVALUATION" is included in the second prompt, the large language model 411 functions as a response-evaluation AI agent that performs evaluation of history information stored in the history storage unit 240. The response-evaluation AI agent evaluates, in response to the second prompt, input data and output data from the terminal apparatus 300 that are included in the history information stored in the history storage unit 240, and outputs an evaluation and a critique. The input data from the terminal apparatus 300 includes utterance transcripts, questionnaire results, audio data, motion data, and facial expression data. The second response data output from the response-evaluation AI agent includes a result of a positive/negative determination, a degree of achievement with respect to a goal input by the user, and a critique text.

When policy information associated with the role of "INSIGHT PRESENTATION" is included in the second prompt, the large language model 411 functions as an insight-presentation AI agent that collectively presents insights obtained from responses of an interlocutor of the user. The insight-presentation AI agent outputs the second response data including insights, in response to the second prompt. The second response data output from the insight-presentation AI agent includes summaries of responses of the interlocutor of the user, and an inference result derived from responses of the interlocutor of the user.

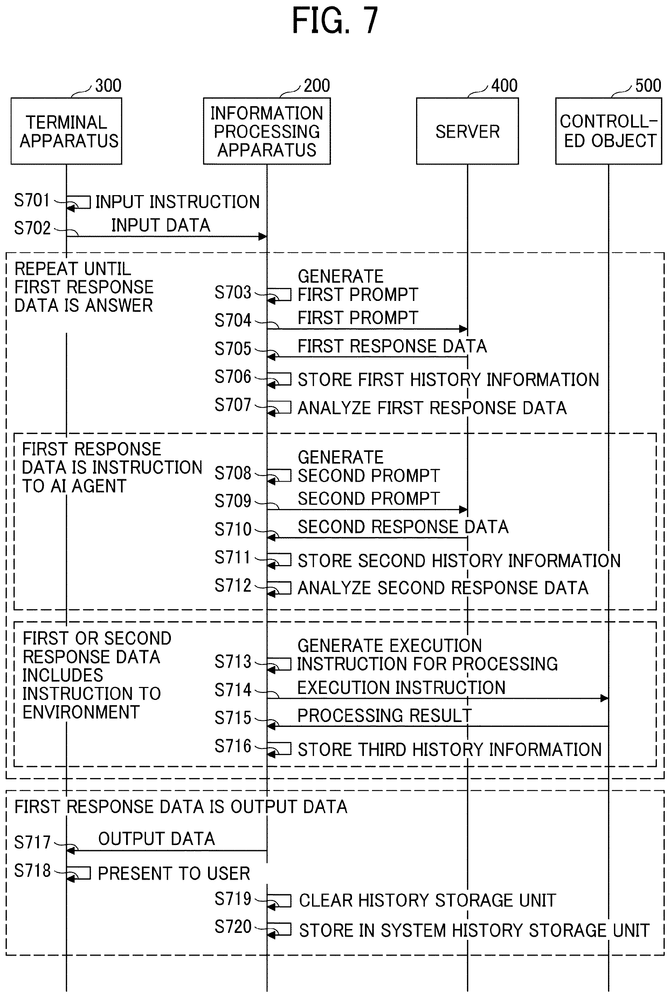

A process performed by the information processing system 100 according to the first embodiment is described below with reference to FIG. 7. FIG. 7 is a sequence diagram illustrating a process performed by the information processing system 100 according to the first embodiment.

In step S701, in the information processing system 100, the input reception unit 340 of the terminal apparatus 300 receives user input, for example, a touch input, for the information processing apparatus 200. In step S702, the communication control unit 360 of the terminal apparatus 300 transmits the input data to the information processing apparatus 200.

In step S703, when the information processing apparatus 200 receives the input data via the input reception unit 271, the first prompt generation unit 272 generates a first prompt requesting generation of output data corresponding to the input data.

The generated first prompt includes the input data, roles and policies for the roles in the policy information stored in the policy storage unit 230, and the first history information 241 and the second history information 242 stored in the history storage unit 240. When the first history information 241 and the second history information 242 are not stored in the history storage unit 240, the first prompt includes the input data, roles, and the policies for the roles.

In step S704, when the information processing apparatus 200 generates the first prompt, the first prompt output unit 273 outputs the first prompt to the server 400. In step S705, the first response acquisition unit 274 acquires first response data from the server 400.

In step S706, the storage control unit 280 of the information processing apparatus 200 stores, in the history storage unit 240, the first history information 241 that associates the first prompt transmitted to the server 400 in step S704 with the first response data obtained from the server 400 in step S705. In step S707, the response analysis unit 278 of the information processing apparatus 200 analyzes the first response data obtained in step S705.

When the analysis in step S707 reveals that the first response data includes a role of an AI agent and instruction content to the AI agent, the processing from step S708 to step S712 in FIG. 7 is performed. In other words, the processing from step S708 to step S712 in FIG. 7 is performed when the first response data is instruction content to the AI agent.

In step S708, the second prompt generation unit 275 of the information processing apparatus 200 generates a second prompt based on the first response data.

The second prompt generation unit 275 refers to the policy storage unit 230 and obtains policy information associated with the role included in the first response data. Then, the second prompt generation unit 275 generates a prompt that includes the policy included in the obtained policy information and instruction content included in the first response data in accordance with a prompt template included in the obtained policy information, and uses the prompt as the second prompt.

The second prompt includes, among the second history information 242 stored in the history storage unit 240, history information indicating the history of interactions between the AI agent of the designated role and the information processing apparatus 200.

In step S709, the second prompt output unit 276 of the information processing apparatus 200 outputs the second prompt to the server 400. The large language model 411 of the server 400 functions as an AI agent that performs the designated role in accordance with the policy included in the second prompt output from the information processing apparatus 200.

In step S710, the second response acquisition unit 277 of the information processing apparatus 200 acquires the second response data from the server 400. In step S711, the storage control unit 280 of the information processing apparatus 200 stores, in the history storage unit 240, the second history information 242 that associates the second prompt output to the server 400 in step S709 with the second response data obtained from the server 400 in step S710. In step S712, the response analysis unit 278 of the information processing apparatus 200 analyzes the second response data.

In step S713, the instruction generation unit 279 of the information processing apparatus 200 generates an execution instruction for processing on a controlled object. The controlled object is designated in the first response data or the second response data. The execution instruction is instructing execution of processing based on the instruction included in the first response data or the second response data. In step S714, the transmission unit 281 of the information processing apparatus 200 transmits the execution instruction to the designated controlled object. In the following description, the designated controlled object is the controlled object 500.

In step S715, the information processing apparatus 200 receives input of a processing result from the controlled object 500 via the input reception unit 271. In step S716, the storage control unit 280 of the information processing apparatus 200 stores, in the history storage unit 240, the third history information 243 that associates the execution instruction for processing transmitted to the controlled object 500 in step S714 with the processing result obtained in step S715.

When the processing of step S713 to step S716 is performed as a result of the analysis of the second response data in step S712, the information processing apparatus 200 repeats the processing from step S708 to step S716 until the second response data becomes an answer to the first response data, namely, until the second response data is determined to constitute an answer to the instruction specified in the first response data. When the analysis in step S712 reveals that the second response data is an answer to the first response data, namely, the second response data constitutes an answer to the instruction specified in the first response data, the storage control unit 280 of the information processing apparatus 200 stores, in the history storage unit 240, the first history information 241 in which the second response data is recorded as an answer to the first response data.

Further, when the processing from step S713 to step S716 is performed as a result of analysis of the first response data in step S707, the information processing apparatus 200 returns to step S703 after step S716.

When the analysis in step S707 reveals that the first response data is output data corresponding to the input data, the following processing from step S717 to step S720 is performed.

In step S717, the transmission unit 281 of the information processing apparatus 200 transmits the first response data to the terminal apparatus 300 as output data corresponding to the input data. In step S718, upon receiving the output data from the information processing apparatus 200, the terminal apparatus 300 presents the output data to the user. For example, the terminal apparatus 300 displays the output data on a display.

In step S719, the storage control unit 280 of the information processing apparatus 200 deletes the first history information 241, the second history information 242, and the third history information 243 from the history storage unit 240. In step S720, the storage control unit 280 stores the first history information 241, the second history information 242, and the third history information 243 in the system history storage unit 260. The first history information 241, the second history information 242, and the third history information 243 are persistently stored in the system history storage unit 260. Each of the first history information 241, the second history information 242, and the third history information 243 may be stored simultaneously in both the system history storage unit 260 and the history storage unit 240.

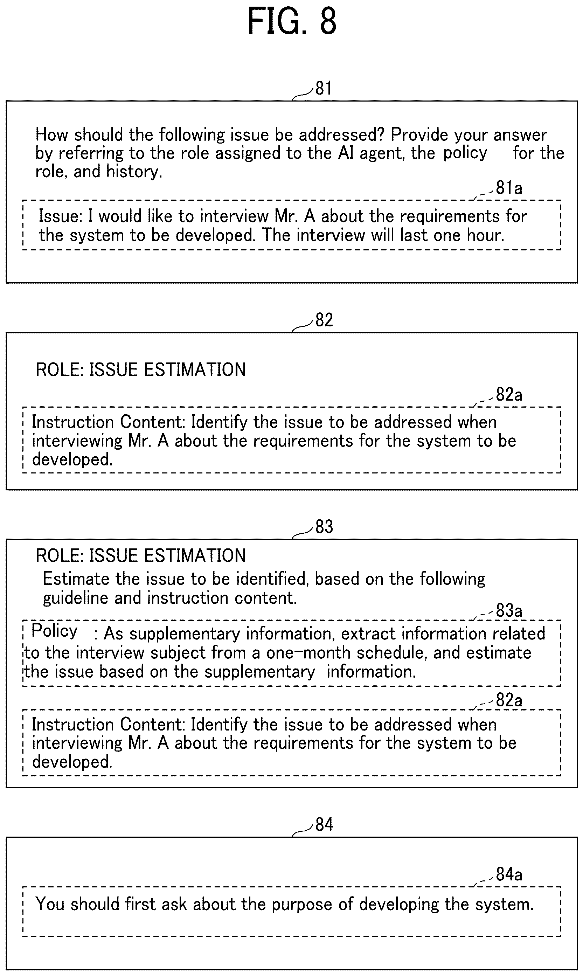

The operation illustrated in FIG. 7 is described in detail with reference to FIGS. 8 to 13. FIG. 8 is a diagram illustrating an example of the operation of the information processing system 100.

FIG. 8 illustrates the operation of the information processing system 100 when input data indicating, for example, "I would like to interview Mr. A about the requirements for the system to be developed. The interview will last one hour." is input from the terminal apparatus 300.

In the information processing apparatus 200, when the input data is received, the first prompt generation unit 272 generates a first prompt that includes the input data in step S703. A prompt 81 in FIG. 8 is an example of the first prompt.

The prompt 81 includes text data indicating "How should the following issue be addressed? Provide your answer by referring to the role assigned to the AI agent, the policy for the role, and history." and input data 81a. The first prompt further includes the roles and the policies for the roles stored in the policy storage unit 230, and all the history information stored in the history storage unit 240.

The information processing apparatus 200 outputs the prompt 81, which is the first prompt, to the server 400, and obtains the first response data from the server 400 in step S705. Response data 82 in FIG. 8 is an example of first response data corresponding to the prompt 81. The response data 82 includes "ROLE: ISSUE ESTIMATION" and text data 82a indicating instruction content.

The response data 82 includes a role of the AI agent and instruction content directed to the AI agent. As a result of the analysis in step S707, the information processing apparatus 200 proceeds to step S708, and the second prompt generation unit 275 generates a second prompt to cause the large language model 411 to function as an issue-estimation AI agent.

Prompt 83 in FIG. 8 is an example of the second prompt. The prompt 83 is obtained by embedding text data 83a indicating the policy for "ROLE: ISSUE ESTIMATION" and the text data 82a indicating the instruction included in the response data 82 into a prompt template corresponding to "ROLE: ISSUE ESTIMATION" in the policy storage unit 230. Further, the prompt 83 includes the second history information 242 corresponding to "ROLE: ISSUE ESTIMATION" from the second history information 242 stored in the history storage unit 240. The prompt 83 may also include the input data 81a.

The information processing apparatus 200 outputs the prompt 83 to the server 400, thereby causing the large language model 411 to function as an issue-estimation AI agent.

In step S710, the information processing apparatus 200 receives the second response data from the server 400.

The second response data obtained in step S710 designates a scheduler as the controlled object and indicates an execution instruction to extract an issue related to the interview, to be executed on the designated controlled object.

The information processing apparatus 200 uses the result of the processing steps S713 to S716 to generate the second prompt again based on the second response data and transmits the generated second prompt to the server 400. As a result, the information processing apparatus 200 obtains response data 84 illustrated in FIG. 8.

The response data 84 in FIG. 8 is an example of the second response data. The response data 84 includes text data 84a indicating "You should first ask about the purpose of developing the system."

In this embodiment, when the second history information 242 that associates the second prompt generated based on the result of the processing of steps S713 to S716 with the response data 84, which is the second response data corresponding to the second prompt, is stored in the history storage unit 240, the information processing apparatus 200 returns to step S703 and generates the first prompt that includes the response data 84.

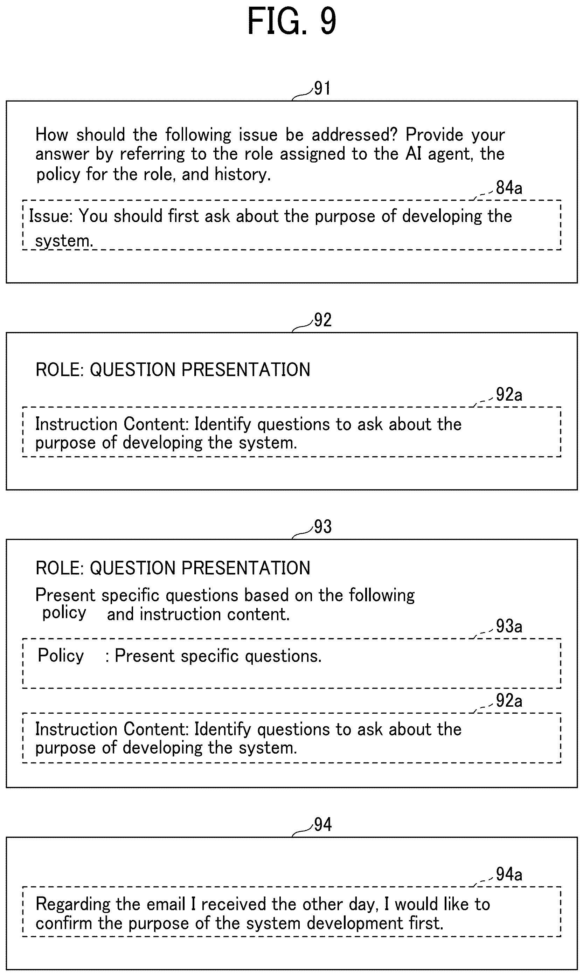

FIG. 9 is a diagram illustrating another example of the operation of the information processing system 100. FIG. 9 illustrates the operation of the information processing system 100 when the second response data indicating "You should first ask about the purpose of developing the system." is stored in the history storage unit 240.

The information processing apparatus 200 returns to step S703 and generates a first prompt that includes the response data 84. A prompt 91 in FIG. 9 is an example of the first prompt and an additional (another) first prompt.

The prompt 91 includes text data indicating "How should the following issue be addressed? Provide your answer by referring to the role assigned to the AI agent, the policy for the role, and history." and text data 84a indicating the response data 84.

The information processing apparatus 200 outputs the prompt 91 to the server 400, and in step S705, obtains the first response data corresponding to the prompt 91 from the server 400.

Response data 92 in FIG. 9 is an example of the first response data and an additional (another) first response data. The response data 92 includes "ROLE: QUESTION PRESENTATION" and text data 92a indicating instruction content.

The response data 92 includes a role of the AI agent and instruction content directed to the AI agent. Accordingly, in step S708, the second prompt generation unit 275 of the information processing apparatus 200 generates the second prompt to cause the large language model 411 to function as a question-presentation AI agent.

A prompt 93 in FIG. 9 is an example of the second prompt. The prompt 93 is obtained by embedding text data 93a indicating the policy for "ROLE: QUESTION PRESENTATION" and the text data 92a indicating the instruction content included in the response data 92 into a prompt template corresponding to "ROLE: QUESTION PRESENTATION" in the policy storage unit 230. Further, the prompt 93 includes the second history information 242 corresponding to "ROLE: ISSUE ESTIMATION" from the second history information 242 stored in the history storage unit 240, in addition to the text data illustrated in FIG. 9.

The information processing apparatus 200 outputs the prompt 93 to the server 400, thereby causing the large language model 411 to function as a question-presentation AI agent.

In step S710, the information processing apparatus 200 receives the second response data from the server 400. Response data 94 in FIG. 9 is an example of the second response data corresponding to the prompt 93. The response data 94 includes text data 94a indicating "Regarding the email I received the other day, I would like to confirm the purpose of the system development first."

In this embodiment, when the second history information 242 that associates the prompt 93 with the response data 94 is stored in the history storage unit 240, the information processing apparatus 200 returns to step S703 and generates the first prompt that includes the response data 94.

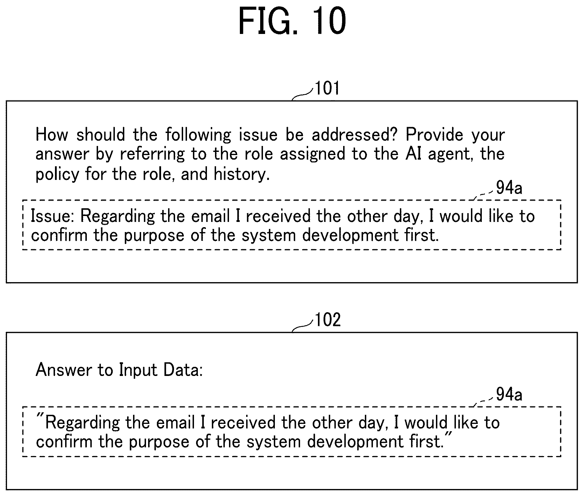

FIG. 10 is a diagram illustrating still another example of the operation of the information processing system 100. FIG. 10 illustrates the operation of the information processing system 100 when the second response data indicating "Regarding the email I received the other day, I would like to confirm the purpose of the system development first." is stored in the history storage unit 240.

The information processing apparatus 200 returns to step S703 and generates a first prompt that includes the response data 94. A prompt 101 in FIG. 10 is an example of the first prompt and an additional (another) first prompt.

The prompt 101 includes text data indicating "How should the following issue be addressed? Provide your answer by referring to the role assigned to the AI agent, the policy for the role, and history." and text data 94a indicating the response data 94.

The information processing apparatus 200 outputs the prompt 101 to the server 400, and in step S705, obtains the first response data corresponding to the prompt 101 from the server 400. Response data 102 in FIG. 10 is an example of the first response data corresponding to the prompt 101. The response data 102 includes text data indicating "Answer to Input Data" and the text data 94a indicating the response data 94.

The information processing apparatus 200 transmits the response data 102 to the terminal apparatus 300 as output data corresponding to the input data.

As described above, by using multiple AI agents that perform specific roles, irrelevant output data can be prevented from being presented in response to input data, and output data corresponding to the input data can be presented efficiently.

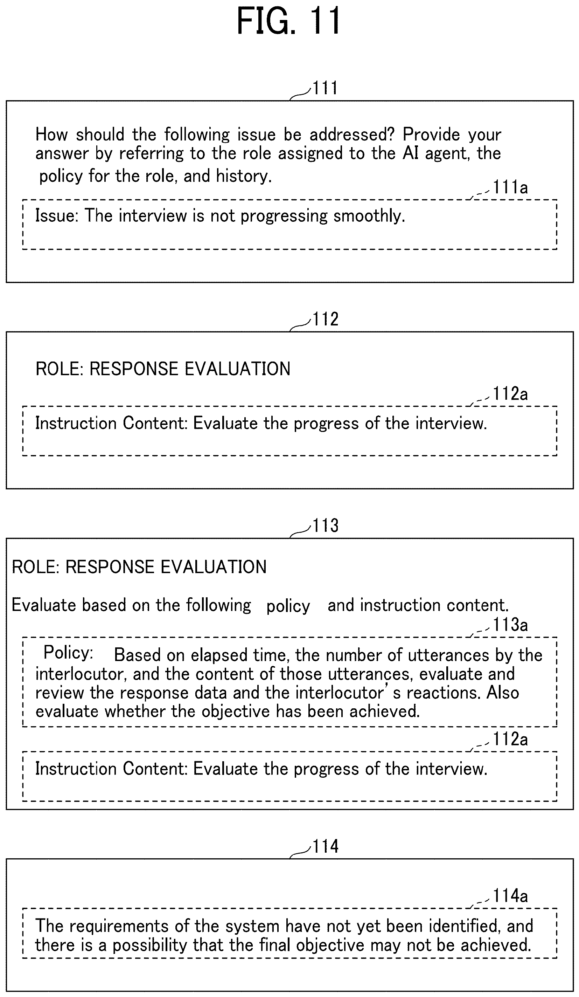

A specific example of updating the policy information stored in the policy storage unit 230 is described with reference to FIGS. 11 to 13.

FIG. 11 is a diagram illustrating still another example of the operation of the information processing system 100. FIG. 11 illustrates the operation of the information processing system 100 when input data indicating, for example, "The interview is not progressing smoothly." is input from the terminal apparatus 300.

In the information processing apparatus 200, when the input data is received, the first prompt generation unit 272 generates a first prompt that includes the input data in step S703. A prompt 111 in FIG. 11 is an example of the first prompt.

The prompt 111 includes text data indicating "How should the following issue be addressed? Provide your answer by referring to the role assigned to the AI agent, the policy for the role, and history." and text data 111a indicating the input data.

The information processing apparatus 200 outputs the first prompt to the server 400, and in step S705, obtains response data 112 that is the first response data from the server 400. The response data 112 includes "ROLE: RESPONSE EVALUATION" and text data 112a indicating instruction content.

As described above, the response data 112 includes a role of the AI agent and instruction content directed to the AI agent. Accordingly, in step S708, the second prompt generation unit 275 of the information processing apparatus 200 generates the second prompt to cause the large language model 411 to function as a response-evaluation AI agent.

A prompt 113 in FIG. 11 is an example of the second prompt. The prompt 113 is obtained by embedding text data 113a indicating the policy for "ROLE: RESPONSE EVALUATION" and the text data 112a indicating the instruction content included in the response data 112 into a prompt template corresponding to "ROLE: RESPONSE EVALUATION" in the policy storage unit 230.

The information processing apparatus 200 outputs the prompt 113 to the server 400, thereby causing the large language model 411 to function as a response-evaluation AI agent.

In step S710, the information processing apparatus 200 receives the second response data from the server 400. Response data 114 in FIG. 11 is an example of the second response data corresponding to the prompt 113. The response data 114 includes text data 114a indicating "The requirements of the system have not yet been identified, and there is a possibility that the final objective may not be achieved."

In this embodiment, when the second history information 242 that associates the prompt 113 with the response data 114 is stored in the history storage unit 240, the information processing apparatus 200 returns to step S703 and generates the first prompt that includes the response data 114.

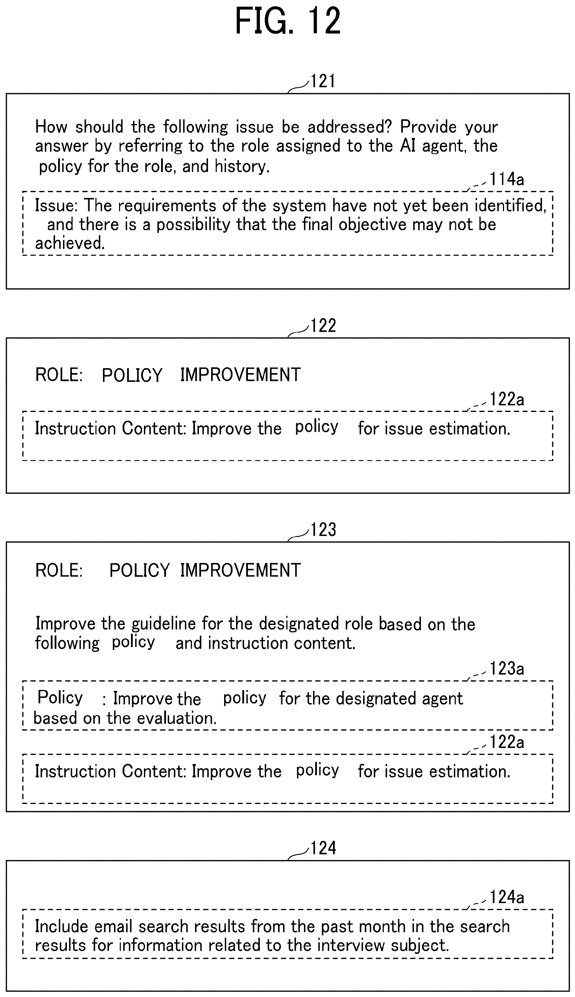

FIG. 12 is a diagram illustrating still another example of the operation of the information processing system 100. FIG. 12 illustrates the operation of the information processing system 100 when the second response data indicating "The requirements of the system have not yet been identified, and there is a possibility that the final objective may not be achieved." is stored in the history storage unit 240.

The information processing apparatus 200 returns to step S703 and generates the first prompt that includes the response data 114. A prompt 121 in FIG. 12 is an example of the first prompt and an additional (another) first prompt that includes the response data 114.

The prompt 121 includes text data indicating "How should the following issue be addressed? Provide your answer by referring to the role assigned to the AI agent, the policy for the role, and history." and text data 114a indicating the response data 114.

The information processing apparatus 200 outputs the prompt 121 to the server 400, and in step S705, obtains response data 122 that is the first response data from the server 400. The response data 122 includes "ROLE: POLICY IMPROVEMENT" and text data 122a indicating instruction content.

The response data 122 includes a role of the AI agent and instruction content directed to the AI agent. Accordingly, in step S708, the second prompt generation unit 275 of the information processing apparatus 200 generates a second prompt to cause the large language model 411 to function as a policy-improvement AI agent.

A prompt 123 in FIG. 12 is an example of the second prompt. The prompt 123 is obtained by embedding text data 123a indicating the policy for "ROLE: POLICY IMPROVEMENT" and the text data 122a indicating the instruction content included in the response data 122 into a prompt template corresponding to "ROLE: POLICY IMPROVEMENT" in the policy storage unit 230.

The information processing apparatus 200 outputs the prompt 123 to the server 400, thereby causing the large language model 411 to function as a policy-improvement AI agent.

In step S710, the information processing apparatus 200 receives the second response data from the server 400. Response data 124 in FIG. 12 is an example of the second response data corresponding to the prompt 123. The response data 124 includes text data 124a indicating "Include email search results from the past month in the search results for information related to the interview subject."

In this embodiment, when the second history information 242 that associates the prompt 123 with the response data 124 is stored in the history storage unit 240, the information processing apparatus 200 returns to step S703 and generates the first prompt that includes the response data 124.

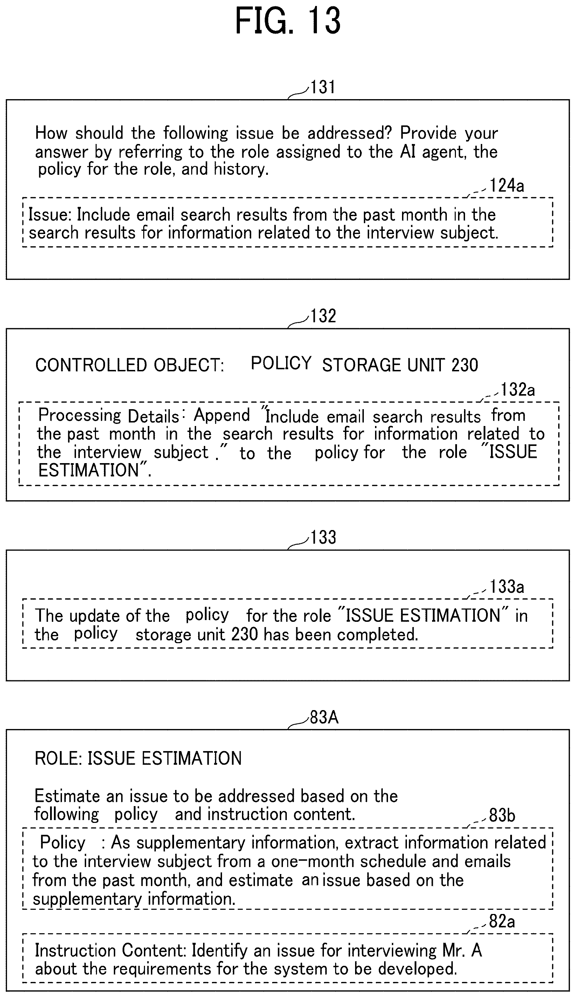

FIG. 13 is a diagram illustrating still another example of the operation of the information processing system 100. FIG. 13 illustrates the operation of the information processing system 100 when the second response data indicating "Include email search results from the past month in the search results for information related to the interview subject." is stored in the history storage unit 240.

The information processing apparatus 200 returns to step S703 and generates the first prompt that includes the response data 124. A prompt 131 in FIG. 13 is an example of the first prompt and an additional (another) first prompt.

The prompt 131 includes text data indicating "How should the following issue be addressed? Provide your answer by referring to the role assigned to the AI agent, the policy for the role, and history." and text data 124a indicating the response data 124.

The information processing apparatus 200 outputs the prompt 131 to the server 400, and in step S705, obtains response data 132 that is the first response data from the server 400. The response data 132 includes "CONTROLLED OBJECT: POLICY STORAGE UNIT 230" and text data 132a indicating processing details.

The controlled object designated in the response data 132 is the policy storage unit 230, and the processing details indicated by text data 132a are to append the statement "Include email search results from the past month in the search results for information related to the interview subject." to the policy for the role of "ISSUE ESTIMATION."

Accordingly, the information processing apparatus 200 proceeds to step S714, and the instruction generation unit 279 generates an execution instruction for processing based on the response data 132.

The processing to be executed by the execution instruction includes appending the text data indicating "Include email search results from the past month in the search results for information related to the interview subject." to the value of the item "POLICY" in the policy information where the value of the item "ROLE" is "ISSUE ESTIMATION," stored in the policy storage unit 230. This processing may be executed by the CPU 201 included in the information processing apparatus 200.

The information processing apparatus 200 retrieves a processing result 133 from the policy storage unit 230, which is the controlled object 500 for which the processing is executed based on the execution instruction indicated by the response data 132. The processing result 133 includes text data 133a indicating that the update of the policy for the role "ISSUE ESTIMATION" in the policy storage unit 230 has been completed. In this embodiment, the update of the policy information stored in the policy storage unit 230 is performed automatically.

The storage control unit 280 of the information processing apparatus 200 stores the third history information 243 that associates the processing result 133 and the response data 132 in the history storage unit 240.

The information processing apparatus 200 may return to step S703 in FIG. 7 when the third history information 243 is stored in the history storage unit 240, and reproduce the processing performed before the policy is updated. Specifically, the information processing apparatus 200 can generate the prompt 81 again and redo the estimation of the issue based on the input data in accordance with the update of the policy for the role of "ISSUE ESTIMATION."

The prompt 83A in FIG. 13 is an example of the second prompt that is output to the server 400 after the policy for the role "ISSUE ESTIMATION" is updated in the policy storage unit 230. In the prompt 83A, the policy for the role "ISSUE ESTIMATION" indicated by text data 83b is the updated policy obtained by the execution of the processing based on the execution instruction indicated by the response data 132.

According to an aspect of the disclosure, by improving the policy for a certain role as described above, more appropriate response data can be obtained when response data is next obtained from the AI agent assigned to the role.

Further, the history of interactions between the information processing apparatus 200, the server 400, and the controlled object 500 can be evaluated by an AI agent, and, based on the evaluation results from the AI agent, the policy for the role of the AI agent can be updated.

According to the first embodiment, for example, even while the user is conducting an interview, the policy for the AI agent can be flexibly improved according to the progress of the interview.

In the present embodiment, the policy for the role designated in the first response data is updated among the roles for which policy information is stored in the policy storage unit 230, but the present embodiment is not limited thereto. Multiple policies for multiple roles may be updated simultaneously, and the policies for all roles for which policy information is stored in the policy storage unit 230 may be updated.

When the policy for a role stored in the policy storage unit 230 is improved, the terminal apparatus 300 displays information indicating that the policy for the role is updated along with the improved (updated) policy. At this time, the response data (first response data) obtained from the large language model 411 functioning as an orchestrator AI agent and the response data (second response data) obtained from the large language model 411 functioning as an AI agent may be displayed on the terminal apparatus 300. In other words, the terminal apparatus 300 may display the history of interactions between the orchestrator AI agent and the AI agent.

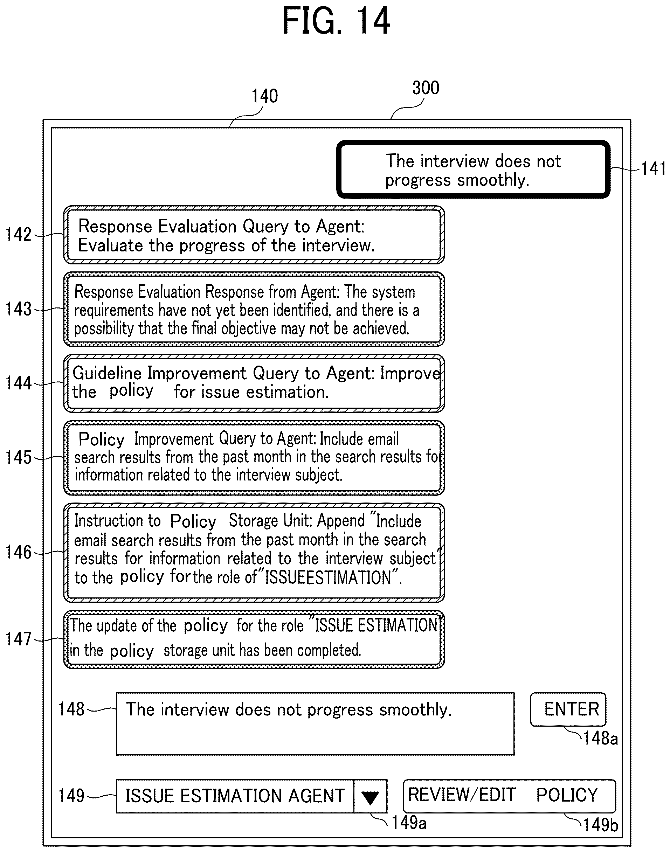

A display example of the terminal apparatus 300 is described below. FIG. 14 is a diagram illustrating an example screen displayed by the terminal apparatus 300 according to the first embodiment.

A screen 140 illustrated in FIG. 14 is an example of a screen displayed on the terminal apparatus 300 when the information processing apparatus 200 receives a processing result indicating that the update of the policy information stored in the policy storage unit 230 has been complete in step S716 of FIG. 7. FIG. 14 illustrates a display example when the input data 111a illustrated in FIG. 11 is input to the terminal apparatus 300.

The screen 140 is displayed on the terminal apparatus 300 by, for example, the display instruction unit 282 of the information processing apparatus 200. For example, the display instruction unit 282 generates screen information for displaying the screen 140 on the terminal apparatus 300, and transmits the screen information to the terminal apparatus 300 via the transmission unit 281.

The screen 140 includes display areas 141, 142, 143, 144, 145, 146, and 147, an input field 148, a selection field 149, and operation buttons 148a, 149a, and 149b.

In the display area 141, the input data 111a input by the user in the input field 148 is displayed. The display area 142 displays the first response data in response to the first prompt that includes the input data. In other words, the display area 142 displays the first response data from the large language model 411 functioning as an orchestrator AI agent. Specifically, the display area 142 displays content that includes the response data 112 illustrated in FIG. 11.

The display area 143 displays the second response data corresponding to the second prompt that includes the response data 112. In other words, the display area 143 displays the second response data generated by the AI agent assigned the role designated in the first response data. Specifically, the display area 143 displays content that includes the response data 114 illustrated in FIG. 11 as response data from the response-evaluation AI agent.

The display area 144 displays the first response data corresponding to the first prompt that includes the second response data displayed in the display area 143. Specifically, the display area 144 displays content that includes the response data 122 illustrated in FIG. 12. This response data 122 is the first response data from the large language model 411 functioning as an orchestrator AI agent.

The display area 145 displays the second response data corresponding to the second prompt that includes the response data 122. In other words, the display area 145 displays the second response data generated by the AI agent assigned the role designated in the first response data. Specifically, the display area 145 displays content that includes the response data 124 illustrated in FIG. 12 as response data from the AI agent performing the role of policy improvement.

The display area 146 displays the first response data corresponding to the first prompt that includes the second response data displayed in the display area 145. Specifically, the display area 146 displays content that includes the response data 132 illustrated in FIG. 13. This response data 132 is the first response data from the large language model 411 functioning as an orchestrator AI agent.

The display area 147 displays the processing result corresponding to the execution instruction, which is for processing on the controlled object 500 and which includes the response data 132. In other words, the display area 147 displays the processing result obtained by processing executed based on the execution instruction for processing included in the first response data for the controlled object 500 designated in the first response data. Specifically, the display area 147 displays the processing result 133 illustrated in FIG. 13, which is the processing result obtained by processing executed on the policy storage unit 230 that is the designated controlled object 500. In other words, the display area 147 displays a notification indicating that the policy information stored in the policy storage unit 230 has been updated.

The input field 148 is a field in which input data from a user of the terminal apparatus 300 is entered. The operation button 148a is an operation button for transmitting the input data entered in the input field 148 to the information processing apparatus 200.

The selection field 149 is used for selecting a role for each of which policy information is stored in the policy storage unit 230. In the selection field 149, when the operation button 149a is operated, a list of roles for each of which policy information is stored in the policy storage unit 230 is displayed in a dropdown manner. The operation button 149b is used for displaying policy information associated with a role selected in the selection field 149. In some implementations, the policy information corresponds to the selected role.

In the screen 140 illustrated in FIG. 14, the role "ISSUE ESTIMATION" is selected in the selection field 149. Accordingly, when the operation button 149b is operated on the screen 140, the terminal apparatus 300 displays the policy information associated with, or corresponding to, the role "ISSUE ESTIMATION."

As described above, the first response data when the large language model 411 functions as an orchestrator AI agent and the second response data when the large language model 411 functions as an AI agent performing the role designated by the orchestrator AI agent can be displayed on the terminal apparatus 300. This allows the user of the terminal apparatus 300 to refer to the interactions between AI agents. Further, when the policy information stored in the policy storage unit 230 is updated by the policy-improvement AI agent, the user of the terminal apparatus 300 can be notified that the policy has been improved (updated).

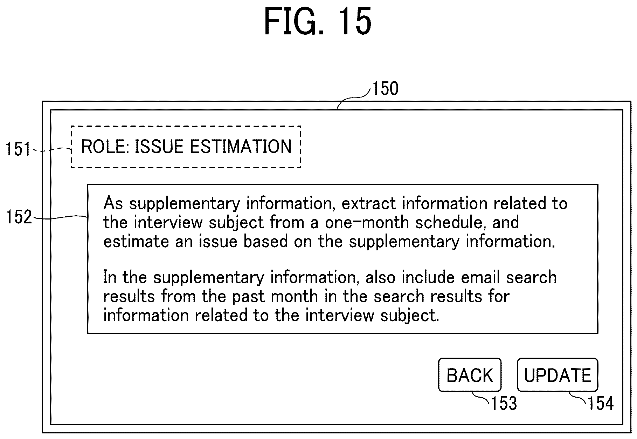

FIG. 15 is a diagram illustrating an example screen displayed by the terminal apparatus 300. A screen 150 illustrated in FIG. 15 is an example of a screen displayed by the terminal apparatus 300 when the operation button 149b is operated on the screen 140 illustrated in FIG. 14.

The screen 150 includes display areas 151 and 152 and operation buttons 153 and 154. The display area 151 displays the role selected in the selection field 149 of the screen 140. The display area 152 displays text data representing the value of the item "policy" associated with the value of the selected item "role" in the policy storage unit 230. In the display area 152, the text data representing the value of the item "policy" is displayed as being editable.

The operation button 153 is used for transitioning from the screen 150 to the screen 140.

The operation button 154 is used for updating the value of the item "policy" in the policy storage unit 230 to the content displayed in the display area 152.

As described above, the text data indicating the policy associated with the role selected by the user among the roles for each of which policy information is stored in the policy storage unit 230 can be displayed. Accordingly, even when the policy information is updated automatically, the user can check or edit the updated policy information.

In the above-described embodiment, the user of the terminal apparatus 300 is assisted in conducting an interview with an interlocutor, however, the present embodiment is not limited thereto and may be applied to other cases.

For example, when the user of the terminal apparatus 300 conducts, for example, an interview or a presentation while presenting materials, the present embodiment may be applied to a review of the results thereof.

In that case, after the user has conducted the interview or presentation while presenting materials, the information processing apparatus 200 obtains, as input data, the results of surveys and minutes related to the interview or presentation. Then, the information processing apparatus 200 improves the policy for presenting materials based on the obtained input data. This allows the user to present materials based on the improved policy at the next interview or presentation.

In the above-described embodiment, a notification indicating that policy information stored in the policy storage unit 230 has been updated is displayed on the terminal apparatus 300, as a processing result obtained by processing executed for the designated controlled object 500, but the present embodiment is not limited thereto.

When receiving the processing result obtained by executing processing for the designated controlled object 500, the information processing apparatus 200 can instruct a mail system included in the controlled object 500 to send an e-mail notifying the processing result to another terminal apparatus different from the terminal apparatus 300. Likewise, when receiving the processing result obtained by executing processing for the designated controlled object 500, the information processing apparatus 200 can instruct a chat system included in the controlled object 500 to present a message notifying the processing result to the user of the chat system.

When the designated controlled object 500 includes a display, the information processing apparatus 200 can instruct the controlled object 500 to display, on the display, the processing result obtained by processing executed for the controlled object 500. Furthermore, the information processing apparatus 200 can instruct the controlled object 500 to output the processing result as audio data.

When the designated controlled object 500 is a robot, the information processing apparatus 200 can instruct the robot to output the processing result as audio data. When the designated controlled object 500 is a robot, the information processing apparatus 200 can instruct the controlled object 500 to perform actions according to the processing result. The actions according to the processing result include gestures and movements based on the processing result. When the designated controlled object 500 is a robot capable of performing gestures, the information processing apparatus 200 may instruct the controlled object 500 to present the processing result using audio data and gestures.

When the designated controlled object 500 is a robot, the robot may also have a camera. In that case, the information processing apparatus 200 can use video data captured by the camera of the robot during its operation as input data for the large language model 411.

Specifically, when the designated controlled object 500 is a robot and the information processing apparatus 200 obtains video data captured while the robot is operating, the information processing apparatus 200 generates a prompt that includes the obtained video data as input data, and outputs the prompt to the server 400. As a result, the information processing apparatus 200 can obtain response data that is based on a result of the recognition of the external environment. Thereafter, the information processing apparatus 200 can implement a loop of operation, recognition, analysis, and re-instruction by generating and sending further operation instructions to the robot based on the response data until the obtained response data becomes an answer to the input data, namely, until the obtained response data is determined to constitute an answer to the input data.

When the controlled object 500 is a printer such as an image forming apparatus, the information processing apparatus 200 can instruct the controlled object 500 to print the processing result obtained by processing executed for the controlled object 500.

Furthermore, when the processing result obtained by processing executed for the designated controlled object 500 includes information indicating an error, the information processing apparatus 200 can stop the physical operation of the controlled object 500.

### Second Embodiment

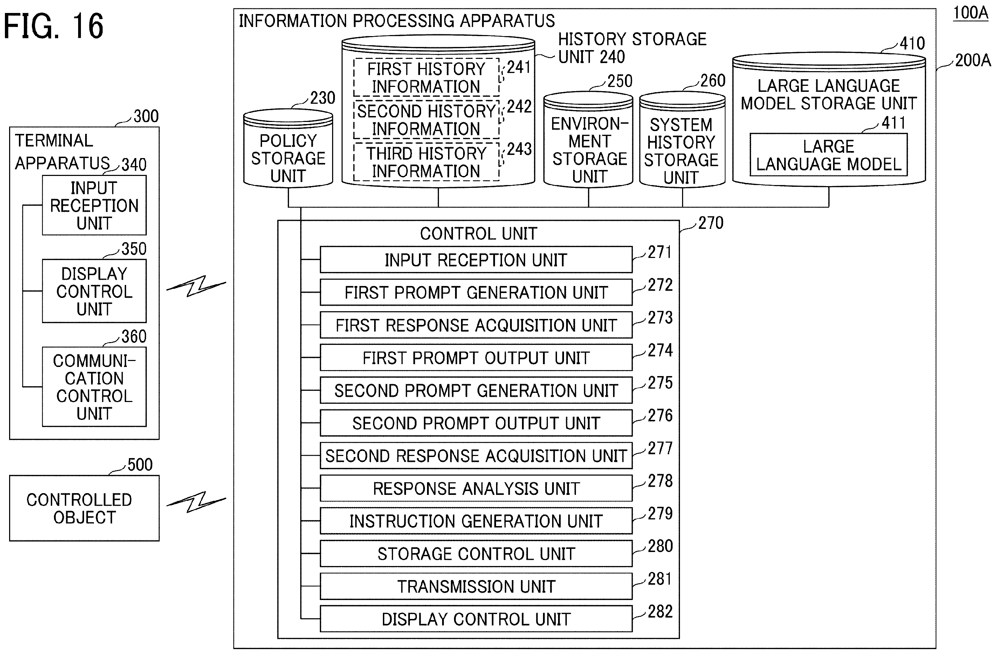

An information processing system according to a second embodiment is described below with reference to FIG. 16. The second embodiment is different from the first embodiment in that the information processing apparatus 200 also has the functionality of the server 400. In the following description of the second embodiment, differences from the first embodiment will be described. Like reference signs are given to components having the same or corresponding functions or configurations as those of the first embodiment, and redundant descriptions thereof are omitted or simplified as appropriate.

FIG. 16 is a diagram illustrating an overview of an information processing system 100A according to the second embodiment. The information processing system 100A includes an information processing apparatus 200A and the terminal apparatus 300.

The information processing apparatus 200A includes the large language model storage unit 410 in addition to the policy storage unit 230, the history storage unit 240, the environment storage unit 250, and the system history storage unit 260. The large language model storage unit 410 stores the large language model 411.

The information processing apparatus 200A that includes the large language model storage unit 410 can reduce the communication load caused by outputting a prompt and obtaining response data.

Each of the functions of the embodiments described above may be implemented by one or more processing circuits or circuitry. In this specification, the "processing circuit or circuitry" in the present specification includes a programmed processor to execute each function by software, such as a processor implemented by an electronic circuit, and devices, such as an application-specific integrated circuit (ASIC), a digital signal processor (DSP), a field-programmable gate array (FPGA), and conventional circuit modules designed to perform the recited functions.

The group of apparatuses or devices described in the above-described embodiments is merely one example of multiple computing environments for implementing the embodiments disclosed herein.

In some embodiments, the information processing apparatus 200 includes multiple computing devices, such as a server cluster. The multiple computing devices are configured to communicate with each other through any type of communication link, including a network or a shared memory, to perform the processes disclosed herein. Similarly, the information processing apparatus 200 may include multiple computing devices that are configured to communicate with each other.

Further, the information processing apparatus 200 may be configured to share the processing steps disclosed herein in various combinations. For example, the processes performed by one or more predetermined units may be performed by any of the computing devices operating as the information processing apparatus 200. Similarly, the functions performed by one or more predetermined units may be performed by any of the computing devices operating as the information processing apparatus 200. The functional elements of the information processing apparatus 200 may be integrated into a single server apparatus or distributed among a plurality of apparatuses.

The information processing apparatus 200 may be any apparatus having a communication function. The information processing apparatus 200 may be, for example, an output device such as a projector (PJ), an interactive whiteboard (IWB; an electronic whiteboard having a blackboard function enabling mutual communication), or digital signage, or may be a head-up display (HUD), an industrial machine, an imaging device, a sound collecting device, a medical device, a networked home appliance, an automobile (connected car), a laptop personal computer (PC), a mobile phone, a smartphone, a tablet terminal, a game console, a personal digital assistant (PDA), a digital camera, a wearable PC, or a desktop PC.

Aspects of the present disclosure are, for example, as follows.

### Aspect 1

An information processing apparatus includes an input reception unit, a first prompt output unit, a first response acquisition unit, and a second prompt output unit. The input reception unit receives input data from a terminal apparatus.

The first prompt output unit outputs, to a large language model, a first prompt requesting generation of output data corresponding to the input data.

The first response acquisition unit obtains, from the large language model, first response data corresponding to the first prompt.

The second prompt output unit refers to a policy storage unit that stores policy information associated with a role to be implemented by the large language model and a policy for the role, and outputs a second prompt to the large language model. The second prompt includes the role to be implemented by the large language model and instruction content for the role that are included in the first prompt, and policy information corresponding to the role.

In a case where the first response data includes the role for updating (improving) the policy and the instruction content for the role, the second prompt output unit outputs, to the large language model, the second prompt including the instruction content for the role and the policy information associated with the role for updating (improving) the policy in the policy storage unit.

In a case where the first response data includes the role whose policy is to be updated (improved) and the instruction content for the role, the second prompt output unit outputs, to the large language model, the second prompt including the instruction content for the role and updated (improved) policy information associated with the role whose policy is to updated (improved) in the policy storage unit.

### Aspect 2

The information processing apparatus according to Aspect 1 further includes a second response acquisition unit and a storage control unit. The second response acquisition unit obtains, from the large language model, second response data corresponding to the second prompt.

The storage control unit stores history information in a history storage unit. The history information includes first history information that associates the first prompt with the first response data, and second history information that associates the second prompt with the second response data.

The first prompt includes the input data and the history information stored in the history storage unit.

### Aspect 3

In the information processing apparatus according to Aspect 2, in a case where the first response data includes the role for evaluating the history information and the instruction content for the role, the second prompt output unit outputs, to the large language model, the second prompt including the instruction content for the role and the policy information associated with the role for evaluating the history information in the policy storage unit.

In addition, the second response acquisition unit obtains the second response data indicating an evaluation result of the history information.

In addition, the first prompt output unit outputs the first prompt that includes the second response data including the evaluation result.

In addition, the first acquisition unit obtains additional first response data that includes the role for updating the policy and the instruction content for the role.

### Aspect 4

The information processing apparatus according to Aspect 2 or Aspect 3 further includes a response analysis unit to analyze the first response data.

In a case where the response analysis unit determines that the role included in the first response data is for evaluating the history information, the second prompt output unit outputs the second prompt.

### Aspect 5

The information processing apparatus according to Aspect 2 to Aspect 4 further includes a transmission unit to transmit the output data corresponding to the input data to the terminal apparatus.

The first prompt output unit outputs the first prompt again, to the large language model, each time the second response acquisition unit obtains the second response data, the first prompt including the history information that includes the second response data.

When the first response data obtained by the first response acquisition unit becomes the output data corresponding to the input data, the transmission unit transmits the first response data that is the output data to the terminal apparatus.

### Aspect 6

The information processing apparatus according to Aspect 5 further includes an instruction generation unit to generate an execution instruction for processing to be performed on a controlled object that is communicatively connected with the information processing apparatus.

In a case where one of the first response data and the second response data includes a designation of the controlled object and instruction content for the processing, the instruction generation unit generates the execution instruction for the processing indicated by the instruction content to be performed on the designated controlled object.

In addition, the transmission unit transmits the execution instruction to the designated controlled object.

In addition, the storage control unit stores, in the history storage unit, third history information that associates the execution instruction for the processing on the designated controlled object with a processing result obtained from the designated controlled object.

### Aspect 7

The information processing apparatus according to Aspect 2 to Aspect 6 further includes a display instruction unit to cause the terminal apparatus to display the first response data and the second response data.

### Aspect 8

In the information processing apparatus according to Aspect 7, the display instruction unit causes the terminal apparatus to display a notification indicating that the policy information has been updated, when the policy information stored in the policy storage unit is updated.

### Aspect 9

In the information processing apparatus according to Aspect 1 to Aspect 8, the policy information includes the role and the policy for the role associated with text data representing a template of the second prompt.

The second prompt output unit outputs the second prompt by embedding, into the text data, the instruction content included in the first response data and the policy information associated with the role for updating the policy among the policy information stored in the policy storage unit.

### Aspect 10

An information processing method performed by an information processing apparatus includes receiving input data from a terminal apparatus.

The method further includes outputting a first prompt to a large language model. The first prompt requests generation of output data corresponding to the input data.

The method further includes obtaining first response data from the large language model. The first response data corresponds to the first prompt.

The method further includes outputting a second prompt to the large language model, the second prompt including a role to be implemented by the large language model and instruction content for the role that are included in the first response data, and policy information corresponding to the role, by referring the policy information is stored in a policy storage unit and associates the role to be implemented by the large language model and a policy for the role.

In a case where the first response data includes the role for updating (improving) the policy and the instruction content for the role, the second prompt includes the instruction content for the role and the policy information associated with the role for updating (improving) the policy in the policy storage unit.

In a case where the first response data includes the role whose policy is to be updated (improved) and the instruction content for the role, the second prompt includes the instruction content for the role and updated (improved) policy information associated with the role whose policy is to be updated (improved) in the policy storage unit.

### Aspect 11

A non-transitory recording medium storing a plurality of program codes which, when executed by one or more processors of an information processing apparatus, cause the one or more processors to perform a method.

The method includes receiving input data from a terminal apparatus.

The method further includes outputting a first prompt to a large language model. The first prompt requests generation of output data corresponding to the input data.

The method further includes obtaining first response data, from the large language model. The first response data corresponds to the first prompt.

The method further includes outputting a second prompt to the large language model, the second prompt including a role to be implemented by the large language model and instruction content for the role that are included in the first response data, and policy information corresponding to the role, by referring the policy information is stored in a policy storage unit and associates the role to be implemented by the large language model and a policy for the role.

In a case where the first response data includes the role for updating (improving) the policy and the instruction content for the role, the second prompt includes the instruction content for the role and the policy information associated with the role for updating (improving) the policy in the policy storage unit.

In a case where the first response data includes the role whose policy is to be updated (improved) and the instruction content for the role, the second prompt includes the instruction content for the role and updated (improved) policy information associated with the role whose policy is to be updated (improved) in the policy storage unit.

### Aspect 12

An information processing system includes an information processing apparatus and a terminal apparatus configured to communicate with the information processing apparatus via a network.

The information processing apparatus includes an input reception unit, a first prompt output unit, a first response acquisition unit, a second prompt output unit and a transmission unit. The input reception unit receives input data from the terminal apparatus.

The first prompt output unit outputs, to a large language model, a first prompt requesting generation of output data corresponding to the input data.

The first response acquisition unit obtains, from the large language model, first response data corresponding to the first prompt.

The second prompt output unit refers to a policy storage unit that stores policy information associated with a role to be implemented by the large language model and a policy for the role, and outputs a second prompt to the large language model. The second prompt includes the role to be implemented by the large language model and instruction content for the role that are included in the first prompt, and policy information corresponding to the role.

The transmission unit transmits the output data generated by the large language model to the terminal apparatus.

The terminal apparatus includes a communication control unit to receive the output data and a display control unit to display the received output data.

In a case where the first response data includes the role for updating (improving) the policy and the instruction content for the role, the second prompt output unit outputs, to the large language model, the second prompt including the instruction content for the role and the policy information associated with the role for updating (improving) the policy in the policy storage unit.

In a case where the first response data includes the role whose policy is to be updated (improved) and the instruction content for the role, the second prompt output unit outputs, to the large language model, the second prompt including the instruction content for the role and updated (improved) policy information associated with the role whose policy is to be updated (improved) in the policy storage unit.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (200) comprising:
an input reception unit (201, 271) configured to receive input data from a terminal apparatus (300);
a first prompt output unit (201, 274) configured to output a first prompt to a large language model (411), the first prompt requesting generation of output data corresponding to the input data; and
a first response acquisition unit (201, 273) configured to obtain, from the large language model (411), first response data corresponding to the first prompt; and
a second prompt output unit (201, 276) configured to output a second prompt to the large language model (411), the second prompt being generated based on the first response data, referring to a policy storage unit (204, 230) that stores policy information associating a plurality of roles to be implemented by the large language model (411) with a plurality of policies, wherein
in a case where the first response data includes a role of policy update from among the plurality of roles and instruction content for the role of the policy update, the second prompt output unit (204, 230) is configured to output, to the large language model (411), the second prompt including the role of the policy update, the instruction content for the role of the policy update, and a policy associated with the role of the policy update from among the plurality of policies in the policy information stored in the policy storage unit (204, 230), and
in a case where the first response data includes another role from among the plurality of roles, for which another policy associated with said another role from among the plurality of policies in the policy information is updated, and instruction content for said another role, the second prompt output unit (204, 230) is configured to output, to the large language model (411), the second prompt including the instruction content for said another role and said another policy that is updated in the policy information stored in the policy storage unit (204, 230).

2. The information processing apparatus (200) of claim 1, further comprising:
a second response acquisition unit (201, 277) configured to obtain, from the large language model (411), second response data corresponding to the second prompt; and
a storage control unit (201, 280) configured to store history information in a history storage unit (204, 240), the history information including first history information (241) that associates the first prompt with the first response data, and second history information (242) that associates the second prompt with second response data,
wherein the first prompt output unit (201, 274) is further configured to output, to the large language model (411), another first prompt including the history information stored in the history storage unit (204, 240), in addition to the input data.

3. The information processing apparatus (200) of claim 2, wherein,
in a case where the first response data includes a role of history information evaluation from among the plurality of roles and instruction content for the role of the history information evaluation,
the second prompt output unit (204, 230) is configured to output the second prompt including the instruction content for the role of the history information evaluation and a policy associated with the role of the history information evaluation from among the plurality of policies in the policy information,
the second response acquisition unit (201, 277) is configured to obtain the second response data indicating an evaluation result for the history information, and
the first prompt output unit (201, 274) is configured to output said another first prompt including the second response data indicating the evaluation result, and
the first response acquisition unit (201, 273) is further configured to obtain additional first response data that includes the role of the policy update from among the plurality of roles and the instruction content for the role that are based on the evaluation result.

4. The information processing apparatus (200) of claim 2 or 3, further comprising
a response analysis unit (201, 278) configured to analyze the first response data, wherein
in a case where the response analysis unit (201, 278) determines that the first response data includes a role of history information evaluation from among the plurality of roles, the second prompt output unit (201, 276) is configured to output the second prompt including instruction content for the role of the history information evaluation and a policy associated with the role of the history information evaluation from among the plurality of policies in the policy information store in the policy storage unit (204, 230).

5. The information processing apparatus (200) of any one of claims 2 to 4, further comprising
a transmission unit (201, 281) configured to transmit the output data corresponding to the input data to the terminal apparatus (300), wherein
the first prompt output unit (201, 274) is configured to output said another first prompt, to the large language model (411), each time the second response acquisition unit (201, 277) obtains the second response data, said another first prompt including the history information that includes the second response data,
the transmission unit (201, 281) is configured to transmit, to the terminal apparatus (300), when the first response data obtained by the first response acquisition unit (201, 273 is determined to be the output data corresponding to the input data.

6. The information processing apparatus (200) of claim 5, further comprising:
an instruction generation unit (201, 279) configured to generate an execution instruction for processing to be performed on a controlled object that is communicatively connected with the information processing apparatus (200), wherein
in a case where one of the first response data and the second response data includes a designation of the controlled object and details of the processing, the instruction generation unit (201, 279) is configured to generate the execution instruction for the processing indicated by the details of the processing, and
the transmission unit (201, 281) is further configured to transmit the execution instruction to the designated controlled object, and
the storage control unit (201, 280) is further configured to store, in the history storage unit (204, 240), third history information that associates the execution instruction for the processing to be performed on the designated controlled object with a processing result obtained, from the designated controlled object, by performing the processing on the designated controlled object.

7. The information processing apparatus (200) of any one of claims 2 to 6, further comprising
a display instruction unit (201, 282) configured to cause the terminal apparatus (300) to display the first response data and the second response data.

8. The information processing apparatus (200) of claim 7, wherein
the display instruction unit (201, 282) is configured to cause the terminal apparatus (300) to display a notification indicating that the policy information has been updated, when the policy information stored in the policy storage unit (204, 230) is updated.

9. The information processing apparatus (200) of any one of claims 1 to 8, wherein
the policy information associates text data representing a template of the second prompt with each of the plurality of roles and a corresponding one of the plurality of policies, and
in a case where the first response data includes the role of the policy update from among the plurality of roles and the instruction content for the role of the policy update, the second prompt output unit (201, 276) is configured to output the second prompt by embedding, into the text data, the instruction content for the role of the policy update included in the first response data and the policy associated with the role of the policy update from among the plurality of policies in the policy information stored in the policy storage unit (204, 230).

10. An information processing method performed by an information processing apparatus, the method comprising:
receiving input data (S702) from a terminal apparatus;
outputting a first prompt (S704) to a large language model (411), the first prompt requesting generation of output data corresponding to the input data;
obtaining first response data (S705), from the large language model (411), the first response data corresponding to the first prompt; and
outputting a second prompt to the large language model (411), the second prompt being generated based on the first response data, referring to a policy storage unit (204, 230) that stores policy information associating a plurality of roles to be implemented by the large language model (411) with a plurality of policies, wherein
in a case where the first response data includes a role of policy update from among the plurality of roles and instruction content for the role of the policy update, outputting, to the large language model (411), the second prompt including the role of the policy update, the instruction content for the role of the policy update, and a policy associated with the role of the policy update from among the plurality of policies in the policy information stored in the policy storage unit (204, 230), and
in a case where the first response data includes another role from among the plurality of roles, for which another policy associated with said another role from among the plurality of policies in the policy information is updated, and instruction content for said another role, outputting, to the large language model (411), the second prompt including the instruction content for said another role and said another policy that is updated in the policy information stored in the policy storage unit (204, 230).

11. A carrier means carrying computer-readable codes for controlling a computer to carry out the method according to claim 10.

12. An information processing system (100, 100A) comprising:
an information processing apparatus (200, 200A); and
a terminal apparatus (300) to communicate with the information processing apparatus (200, 200A) via a network, wherein
the information processing apparatus (200, 200A) including:
an input reception unit (201, 271) configured to receive input data from the terminal apparatus (300);
a first prompt output unit (201, 274) configured to output a first prompt to a large language model (411), the first prompt requesting generation of output data corresponding to the input data;
a first response acquisition unit (201, 273) configured to obtain, from the large language model (411), first response data corresponding to the first prompt;
a second prompt output unit (201, 276) configured to output a second prompt to the large language model (411), the second prompt being generated based on the first response data, referring to a policy storage unit (204, 230) that stores policy information associating a plurality of roles to be implemented by the large language model (411) with a plurality of policies); and
a transmission unit (201, 281) configured to transmit the output data corresponding to the input data to the terminal apparatus (300),
the terminal apparatus (300) including:
a communication control unit (301, 360) configured to receive the output data; and
a display control unit (318, 350) configured to display the received output data, wherein
in a case where the first response data includes a role of policy update from among the plurality of roles and instruction content for the role of the policy update, the second prompt output unit (204, 230) is configured to output, to the large language model (411), the second prompt including the role of the policy update, the instruction content for the role of the policy update, and a policy associated with the role of the policy update from among the plurality of policies in the policy information stored in the policy storage unit (204, 230), and
in a case where the first response data includes another role from among the plurality of roles, for which another policy associated with said another role from among the plurality of policies in the policy information is updated, and instruction content for said another role, the second prompt output unit (204, 230) is configured to output, to the large language model (411), the second prompt including the instruction content for said another role and said another policy that is updated in the policy information stored in the policy storage unit (204, 230).
